# EUROPEAN PATENT APPLICATION

(11) **EP 4 742 625 A1**
(43) Date of publication of application: **13.05.2026**
(21) Application number: 24911589.0
(22) Date of filing: 28.12.2024
(51) Int. Cl.: H04L 65/1069

(54) **VOIP CALL METHOD AND RELATED APPARATUS**

(30) Priority: 29.12.2023 CN 202311865222; 10.01.2024 CN 202410042257
(71) Applicant: Huawei Technologies Co., Ltd., Shenzhen, Guangdong 518129 (CN)
(72) Inventor: ZHAO, Xiaolei, Shenzhen, Guangdong 518129 (CN); LI, Feng, Shenzhen, Guangdong 518129 (CN); LI, Yibing, Shenzhen, Guangdong 518129 (CN); LI, Chao, Shenzhen, Guangdong 518129 (CN); WEN, Baofu, Shenzhen, Guangdong 518129 (CN)
(74) Representative: MERH-IP Matias Erny Reichl Hoffmann Patentanwälte PartG mbB
(86) International application number: PCT/CN2024/143522
(87) International publication number: WO 2025/140675

(57) **Abstract**

This application discloses a VoIP call method and a related apparatus, applied to an electronic device. The method includes: receiving a VoIP call message sent by an application server of a first VoIP application through a push server, where the VoIP call message is used to request to perform a VoIP call; starting a first VoIP lightweight process of the first VoIP application, and providing the VoIP call message to the first VoIP lightweight process; displaying a call notification based on the VoIP call message obtained by the first VoIP lightweight process; and the first VoIP lightweight process establishes a persistent connection to the application server. In this way, the VoIP call can be implemented at low power consumption and memory costs.

## Description

This application claims priority to Chinese Patent Application No. 202311865222.5, filed with the China National Intellectual Property Administration on December 29, 2023, and entitled "VOIP CALL METHOD AND RELATED APPARATUS", which is incorporated herein by reference in its entirety. This application claims priority to Chinese Patent Application No. 202410042257.7, filed with the China National Intellectual Property Administration on January 10, 2024, and entitled "VOIP CALL METHOD AND RELATED APPARATUS", which is incorporated herein by reference in its entirety.

### TECHNICAL FIELD

This application relates to the field of electronic technologies, and in particular, to a VoIP call method and a related apparatus.

### BACKGROUND

With development of mobile internets and improvement of people's living standards, more users use terminal devices such as mobile phones to make calls. A call between mobile phones may be a carrier call implemented through a carrier network, or may be a voice over internet protocol (Voice over Internet Protocol, VoIP) implemented through the internet. An application that can implement a VoIP call (the application may be a VoIP application for short) may be installed on the mobile phone. When the VoIP application is run in the foreground, a persistent connection may be established between the VoIP application and an application server to perform device-cloud call communication, and a VoIP call between users is implemented through the application server. When the VoIP application is switched to the background, a system of the terminal device freezes or directly destroys a process of the application from a perspective of device power consumption. In this case, the VoIP application cannot communicate with the application server.

Currently, when the VoIP application is switched to the background, how to implement a VoIP call at low costs needs to be studied.

### SUMMARY

Embodiments of this application provide a VoIP call method and a related apparatus, to implement a VoIP call at low power consumption and memory costs.

According to a first aspect, this application provides a VoIP call method, applied to an electronic device, where the electronic device includes a first VoIP application, and the method includes: receiving a VoIP call message sent by an application server of a first VoIP application through a push server, where the VoIP call message is used to request to perform a VoIP call; starting a first VoIP lightweight process of the first VoIP application, and providing the VoIP call message to the first VoIP lightweight process; displaying a call notification based on the VoIP call message obtained by the first VoIP lightweight process; and the first VoIP lightweight process establishes a persistent connection to the application server. In this embodiment of this application, after receiving the VoIP call message, the push server starts a VoIP lightweight process, and establishes the persistent connection to the application server based on the VoIP lightweight process, to implement the VoIP call without starting a main application process. In this way, the VoIP call can be implemented at low device power consumption and memory costs.

In an implementation, after displaying the call notification based on the VoIP call message obtained by the first VoIP lightweight process, the method further includes: receiving a first operation, where the first operation is used to answer the VoIP call; the first VoIP lightweight process loads, in response to the first operation, an answering page of the VoIP call; displaying the answering page; and the first VoIP lightweight process executes, based on the persistent connection, a call operation with the application server. In this embodiment of this application, after a user answers the VoIP call, the VoIP lightweight process loads the answering page, and performs the VoIP call based on the persistent connection created by the VoIP lightweight process. In this way, user experience is consistent with that of "starting the main application process to answer the call", but the main application process is not started, and device power consumption and required memory are reduced.

In an implementation, after the first VoIP lightweight process executes the call operation with the application server, the method further includes: receiving a second operation, where the second operation is used to hang up the VoIP call; and in response to the second operation, destroying the first VoIP lightweight process and stopping displaying the answering page. In this embodiment of this application, after a called user hangs up the VoIP call, the VoIP lightweight process is destroyed in time. In this way, a waste of device power consumption and memory caused by continuous running of the VoIP lightweight process after the called user hangs up the VoIP call is avoided.

In an implementation, after the first VoIP lightweight process executes the call operation with the application server for the VoIP call message, the method further includes: receiving a first message sent by the application server, where the first message indicates that the caller hangs up the VoIP call; and based on the first message, destroying the first VoIP lightweight process and stopping displaying the answering page. In this embodiment of this application, after the caller hangs up the VoIP call, the VoIP lightweight process is destroyed in time. In this way, a waste of device power consumption and memory caused by continuous running of the VoIP lightweight process after the caller hangs up the VoIP call is avoided.

In an implementation, after displaying the call notification based on the VoIP call message obtained by the first VoIP lightweight process, the method further includes: receiving a third operation, where the third operation is used to decline the VoIP call corresponding to the VoIP call message or delete the call notification; and destroying the first VoIP lightweight process in response to the third operation. In this embodiment of this application, after the called user declines the VoIP call, the VoIP lightweight process is destroyed in time. In this way, a waste of device power consumption and memory caused by continuous running of the VoIP lightweight process after the called user declines the VoIP call is avoided.

In an implementation, after displaying the call notification based on the VoIP call message obtained by the first VoIP lightweight process, the method further includes: destroying the first VoIP lightweight process when it is detected that a user does not answer the VoIP call within first duration. In this embodiment of this application, when the called user does not answer the VoIP call for a long time, the VoIP lightweight process is destroyed in time. In this way, a waste of device power consumption and memory caused by continuous running of the VoIP lightweight process when the VoIP call is not answered for a long time is avoided.

In an implementation, after the first VoIP lightweight process executes the call operation with the application server for the VoIP call message, the method further includes: receiving a second message sent by the application server, where the second message indicates that the caller cancels calling the VoIP call; and destroying the first VoIP lightweight process based on the second message. In this embodiment of this application, after the caller cancels the call, the VoIP lightweight process is destroyed in time. In this way, a waste of device power consumption and memory caused by continuous running of the VoIP lightweight process after the caller cancels the call is avoided.

In an implementation, the first VoIP lightweight process is independent of a main application process of the first VoIP application. In this embodiment of this application, an application process does not need to be started when the VoIP lightweight process is started, and the VoIP call is implemented based on the VoIP lightweight process, so that device power consumption and required memory are reduced.

In an implementation, the electronic device includes an API blocklist, and the first VoIP lightweight process is prohibited from invoking an API in the API blocklist. In this embodiment of this application, the API blocklist is managed, so that behavior of the first VoIP application in the VoIP lightweight process can be restricted, and an operation unrelated to the VoIP call cannot be performed on the first VoIP application.

In an implementation, before destroying the first VoIP lightweight process, the method further includes: performing pre-destruction processing on the first VoIP lightweight process. In this embodiment of this application, the pre-destruction processing is performed, to avoid loss of important data.

In an implementation, the electronic device further includes a push service, a lightweight process management service, a VoIP call management service, and a notification management service, and receiving the VoIP call message sent by the application server of the first VoIP application through the push server includes: The push service receives the VoIP call message sent by the application server through the push server; and the push service sends the VoIP call message to the lightweight process management service. Starting the first VoIP lightweight process of the first VoIP application, and providing the VoIP call message to the first VoIP lightweight process includes: The lightweight process management service starts the first VoIP lightweight process of the first VoIP application, and sends the VoIP call message to the first VoIP lightweight process. Displaying the call notification based on the VoIP call message obtained by the first VoIP lightweight process includes: The first VoIP lightweight process sends incoming call information of the VoIP call message to the VoIP call management service; and the VoIP call management service indicates the notification management service to display the call notification of the VoIP call message based on the incoming call information. In this embodiment of this application, after the push server sends the VoIP call message to the push service of the electronic device, the VoIP lightweight process of the first VoIP application may be started based on the lightweight process management service, and the call notification is displayed based on the VoIP call management service and the notification management service. User experience may be consistent with that of "starting the main application process for answering", but the main application process is not started, and device power consumption and required memory are reduced.

In an implementation, after the push service sends the VoIP call message to the lightweight process management service, the method further includes: The lightweight process management service enables a first timer. After the first VoIP lightweight process sends the incoming call information of the VoIP call message to the VoIP call management service, the method further includes: The VoIP call management service sends a call status to the lightweight process management service, where the call status indicates that the incoming call information is reported; and before the first timer expires, if the lightweight process management service has received the call status, the lightweight process management service disables the first timer; or before the first timer expires, if the lightweight process management service has not received the call status, the lightweight process management service destroys the first VoIP lightweight process when the first timer expires. In this embodiment of this application, the first timer may be used, so that the first VoIP application needs to invoke, within specified time, an interface of the VoIP call management service to report the incoming call information of the VoIP call message. Otherwise, the VoIP lightweight process corresponding to the VoIP call message is destroyed, so that the first VoIP application does not maliciously execute the VoIP lightweight process in the background for a long time based on the VoIP call message.

In an implementation, after the push service sends the VoIP call message to the lightweight process management service, the method further includes: The lightweight process management service sends first indication information of the VoIP call message to the VoIP call management service. After the first VoIP lightweight process sends the incoming call information of the VoIP call message to the VoIP call management service, the method further includes: The VoIP call management service verifies validity of the incoming call information based on the first indication information. That the VoIP call management service indicates the notification management service to display the call notification of the VoIP call message based on the incoming call information includes: When it is verified that the incoming call information is valid, the notification management service displays the call notification of the VoIP call message based on the incoming call information. In this embodiment of this application, the lightweight process management service notifies the VoIP call message to the VoIP call management service in advance, so that the VoIP call management service performs security check on the incoming call information of the VoIP call message, to prevent the first VoIP application from maliciously requesting to display a call notification of an abnormal procedure.

In an implementation, that the first VoIP lightweight process loads, in response to the first operation, the answering page of the VoIP call includes: The notification management service invokes, in response to the first operation, an answering service of the VoIP call management service; the answering service creates a first window, where the first window includes a first page; the answering service invokes an answering loading module on the first page; and the answering loading module invokes, according to a cross-process loading mechanism, the first VoIP lightweight process to load the answering page of the VoIP call, and renders the answering page on the first page. Displaying the answering page includes: displaying the first window. In this embodiment of this application, after the called user answers the VoIP call, based on a cross-process loading capability of the answering loading module of the VoIP lightweight process, when the user answers the VoIP call, the answering page of the VoIP lightweight process may be rendered to the first page of the VoIP call management service for displaying. In the view of the user, it still seems that the answering page is displayed in the first VoIP application. In this way, user experience is consistent with that of "starting the main application process to answer the call", but the main application process is not started, and device power consumption and required memory are reduced.

In an implementation, in response to the second operation, destroying the first VoIP lightweight process and stopping displaying the answering page, or based on the first message, destroying the first VoIP lightweight process and stopping displaying the answering page includes: The first VoIP lightweight process destroys the answering page in response to the second operation or based on the second message; the first VoIP lightweight process sends a hang-up state to the VoIP call management service; the VoIP call management service destroys the first page based on the hang-up state, and sends the hang-up state to the lightweight process management service; and the lightweight process management service destroys the first VoIP lightweight process based on the hang-up state. In this embodiment of this application, after the called user or the caller hangs up the VoIP call, the first VoIP lightweight process is destroyed in time based on the VoIP call management service and the lightweight process management service, to avoid impact of the VoIP lightweight process on device power consumption and memory after the call is hung up.

In an implementation, destroying the first VoIP lightweight process in response to the third operation includes: The notification management service invokes, in response to the third operation, a declining service of the VoIP call management service; the declining service indicates the notification management service to delete the call notification; the declining service indicates the first VoIP lightweight process to perform declining processing on the VoIP call message; the first VoIP lightweight process sends a declining state to the lightweight process management service, where the declining state indicates that the VoIP call is declined; and the lightweight process management service destroys the first VoIP lightweight process based on the declining state. In this embodiment of this application, after the called user declines the VoIP call or deletes the call notification, the first VoIP lightweight process is destroyed in time based on the VoIP call management service and the lightweight process management service, to avoid impact of the VoIP lightweight process on device power consumption and memory after the call is declined.

In an implementation, destroying the first VoIP lightweight process when it is detected that the user does not answer the VoIP call within the first duration or destroying the first VoIP lightweight process based on the second message includes: The first VoIP lightweight process sends an unanswered state to the VoIP call management service based on the second message or when it is detected that the user does not answer the VoIP call within the first duration; the VoIP call management service indicates, based on the unanswered state, the notification management service to delete the call notification, and sends the unanswered state to the lightweight process management service; and the lightweight process management service destroys the first VoIP lightweight process based on the unanswered state. In this embodiment of this application, after the called user does not answer the VoIP call for a long time or the caller may actively cancel the call, the first VoIP lightweight process is destroyed in time based on the VoIP call management service and the lightweight process management service, to avoid impact of the VoIP lightweight process on device power consumption and memory after the call is not answered.

In an implementation, the method further includes: When starting the first VoIP lightweight process of the first VoIP application, the lightweight process management service loads an API that can be invoked other than the API in the API blocklist to process space of the first VoIP lightweight process. In this embodiment of this application, the API blocklist is managed, so that behavior of the first VoIP application in the VoIP lightweight process can be restricted, and an operation unrelated to the VoIP call cannot be performed on the first VoIP application.

According to a second aspect, this application provides a VoIP call method, applied to an electronic device, where the electronic device includes a first VoIP application, a lightweight process management service, a VoIP call management service, and a notification management service, and the method includes: The lightweight process management service receives a VoIP call message sent by an application server of a first VoIP application through a push (Push) server, where the VoIP call message is used to request to perform a VoIP call; the lightweight process management service invokes a first VoIP lightweight process for starting the first VoIP application, to send the VoIP call message to the first VoIP lightweight process; the first VoIP lightweight process reports incoming call information of the VoIP call message to the VoIP call management service; and the VoIP call management service indicates the notification management service to display a call notification of the VoIP call message based on the incoming call information. In this embodiment of this application, after the push server sends the VoIP call message to the push service of the electronic device, the VoIP lightweight process of the first VoIP application may be started based on the lightweight process management service, and the call notification is displayed based on the VoIP call management service and the notification management service. User experience may be consistent with that of "starting the main application process for answering", but the main application process is not started, and device power consumption and required memory are reduced.

In an implementation, an application programming interface API blocklist is set for the lightweight process management service, and when the lightweight process management service starts the first VoIP lightweight process, the first VoIP lightweight process is prohibited from invoking an API in the API blocklist. In this embodiment of this application, the API blocklist is managed, so that behavior of the first VoIP application in the VoIP lightweight process can be restricted, and an operation unrelated to the VoIP call cannot be performed on the first VoIP application.

In an implementation, after the lightweight process management service receives the VoIP call message, the method further includes: enabling a first timer. After the first VoIP lightweight process reports the incoming call information of the VoIP call message to the VoIP call management service, the method further includes: The VoIP call management service sends a call status to the lightweight process management service, where the call status indicates that the incoming call information is reported; and before the first timer expires, if the lightweight process management service has received the call status, the lightweight process management service disables the first timer; or before the first timer expires, if the lightweight process management service has not received the call status, the lightweight process management service destroys the first VoIP lightweight process when the first timer expires. In this embodiment of this application, the first timer may be used, so that the first VoIP application needs to invoke, within specified time, an interface of the VoIP call management service to report the incoming call information of the VoIP call message. Otherwise, the VoIP lightweight process corresponding to the VoIP call message is destroyed, so that the first VoIP application does not maliciously execute the VoIP lightweight process in the background for a long time based on the VoIP call message.

In an implementation, after the lightweight process management service receives the VoIP call message, the method further includes: The lightweight process management service sends first indication information of the VoIP call message to the VoIP call management service. After the first VoIP lightweight process reports the incoming call information of the VoIP call message to the VoIP call management service, the method further includes: The VoIP call management service verifies validity of the incoming call information based on the first indication information. That the VoIP call management service indicates the notification management service to display the call notification of the VoIP call message based on the incoming call information includes: When it is verified that the incoming call information is valid, the notification management service displays the call notification of the VoIP call message based on the incoming call information. In this embodiment of this application, the lightweight process management service notifies the VoIP call message to the VoIP call management service in advance, so that the VoIP call management service performs security check on the incoming call information of the VoIP call message, to prevent the first VoIP application from maliciously requesting to display a call notification of an abnormal procedure.

In an implementation, after the lightweight process management service starts the first VoIP lightweight process of the first VoIP application, or before the first VoIP lightweight process reports the incoming call information of the VoIP call message to the VoIP call management service, the method further includes: The first VoIP lightweight process establishes a communication connection to the application server, where the communication connection may be used for the VoIP call. The communication connection may be a persistent connection.

In an implementation, after the notification management service displays the call notification of the VoIP call message based on the incoming call information, the method further includes: The notification management service invokes, in response to a first operation, an answering service of the VoIP call management service, where the first operation is used to answer the VoIP call requested by the VoIP call message; the answering service creates a first page; the answering service invokes an answering loading module on the first page; the answering loading module invokes, according to a cross-process loading mechanism, the first VoIP lightweight process to load an answering page of the VoIP call, and renders the answering page to the first page; the electronic device displays a first page obtained by rendering the answering page; and the first VoIP lightweight process performs the VoIP call with the application server for the VoIP call message. In this embodiment of this application, after the called user answers the VoIP call, based on a cross-process loading capability of the answering loading module of the VoIP lightweight process, when the user answers the VoIP call, the answering page of the VoIP lightweight process may be rendered to the first page of the VoIP call management service for displaying. In the view of the user, it still seems that the answering page is displayed in the first VoIP application. In this way, user experience is consistent with that of "starting the main application process to answer the call", but the main application process is not started, and device power consumption and required memory are reduced.

In an implementation, after the notification management service displays the call notification of the VoIP call message based on the incoming call information, the method further includes: The notification management service invokes, in response to a second operation, a declining service of the VoIP call management service, where the second operation is used to decline the VoIP call requested by the VoIP call message, or delete the call notification; the declining service indicates the notification management service to delete the call notification; the declining service indicates the first VoIP lightweight process to perform declining processing on the VoIP call message; the VoIP call management service sends a declining state to the lightweight process management service, where the declining state indicates that the VoIP call requested by the VoIP call message is declined; and the lightweight process management service destroys the first VoIP lightweight process based on the declining state. In this embodiment of this application, after the called user declines the VoIP call or deletes the call notification, the first VoIP lightweight process is destroyed in time based on the VoIP call management service and the lightweight process management service, to avoid impact of the VoIP lightweight process on device power consumption and memory after the call is declined.

In an implementation, after the declining service of the VoIP call management service indicates the first VoIP lightweight process to perform declining processing on the VoIP call message, the method further includes: The first VoIP lightweight process sends the declining state to the application server.

In an implementation, after the notification management service displays the call notification of the VoIP call message based on the incoming call information, the method further includes: The first VoIP lightweight process sends an unanswered state to the VoIP call management service when it is detected that the caller cancels the VoIP call or the called user does not answer the call within the first duration; the VoIP call management service indicates, based on the unanswered state, the notification management service to delete the call notification, and sends the unanswered state to the lightweight process management service; and the lightweight process management service destroys the first VoIP lightweight process based on the unanswered state. In this embodiment of this application, after the called user does not answer the VoIP call for a long time or the caller may actively cancel the call, the first VoIP lightweight process is destroyed in time based on the VoIP call management service and the lightweight process management service, to avoid impact of the VoIP lightweight process on device power consumption and memory after the call is not answered.

In an implementation, after the first VoIP lightweight process performs the VoIP call with the application server for the VoIP call message, the method further includes: The first VoIP lightweight process destroys the answering page when a hang-up operation is detected or the caller hangs up the VoIP call; the first VoIP lightweight process sends a hang-up state to the VoIP call management service; the VoIP call management service destroys the first page based on the hang-up state, and sends the hang-up state to the lightweight process management service; and the lightweight process management service destroys the first VoIP lightweight process based on the hang-up state. In this embodiment of this application, after the called user or the caller hangs up the VoIP call, the first VoIP lightweight process is destroyed in time based on the VoIP call management service and the lightweight process management service, to avoid impact of the VoIP lightweight process on device power consumption and memory after the call is hung up.

In an implementation, before the lightweight process management service destroys the first VoIP lightweight process, the method further includes: The lightweight process management service indicates perform pre-destruction processing on the first VoIP lightweight process; and the pre-destruction processing is performed on the first VoIP lightweight process. In this embodiment of this application, the pre-destruction processing is performed, to avoid loss of important data.

According to a third aspect, an embodiment of this application provides an electronic device, where the electronic device includes a processor and a memory, the memory is coupled to the processor, the memory is configured to store computer program code, the computer program code includes computer instructions, and when the processor reads the computer instructions from the memory, the electronic device is enabled to perform the VoIP call according to the first aspect.

According to a fourth aspect, an embodiment of this application provides a computer storage medium, including computer instructions. When the computer instructions are run on an electronic device, the electronic device is enabled to perform the VoIP call according to any one of the foregoing aspects and the possible implementations.

According to a fifth aspect, an embodiment of this application provides a computer program product. When the computer program product is run on a computer, the computer is enabled to perform the VoIP call according to any one of the foregoing aspects and the possible implementations.

### BRIEF DESCRIPTION OF DRAWINGS

FIG. 1 is a diagram of a system architecture of a communication system according to an embodiment of this application;
FIG. 2 is a schematic flowchart of a VoIP call method according to an embodiment of this application;
FIG. 3A is a schematic flowchart of another VoIP call method according to an embodiment of this application;
FIG. 3B is a diagram of a software structure of a software system according to an embodiment of this application;
FIG. 4A-1 to FIG. 4A-3 are a diagram of a call display procedure of a VoIP call method according to an embodiment of this application;

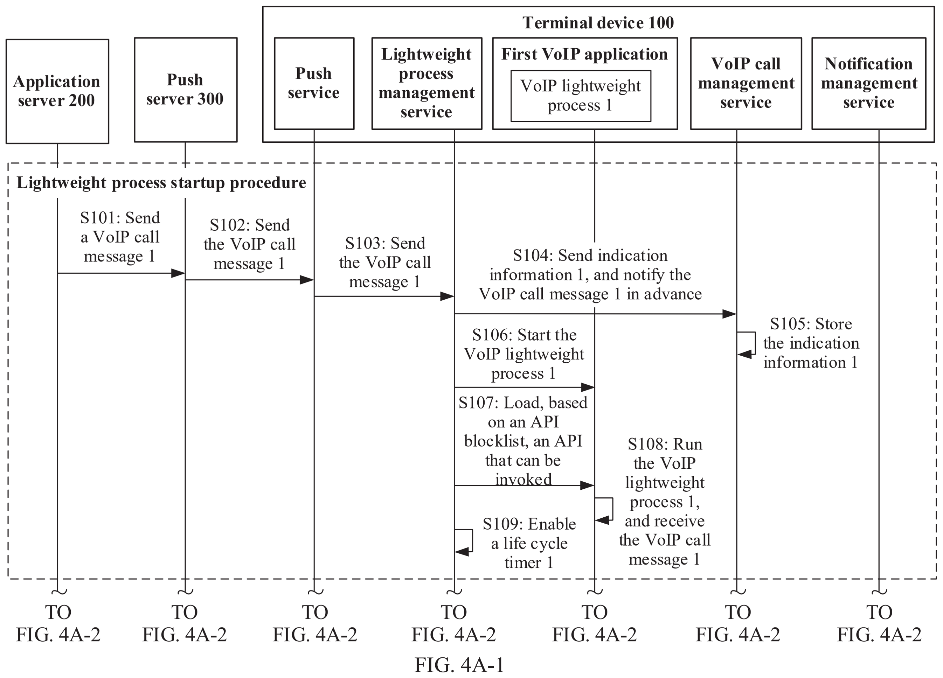

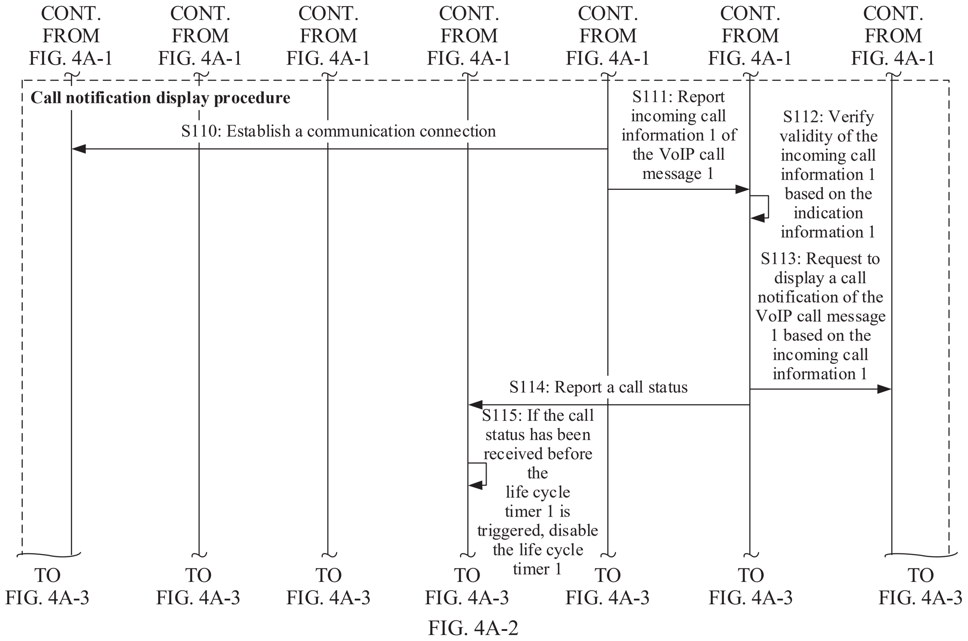

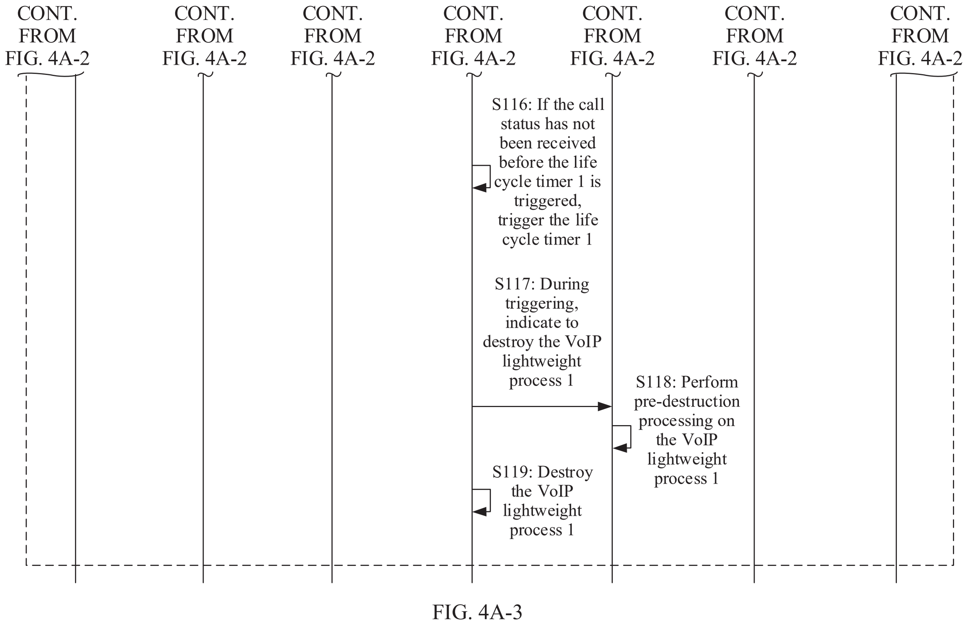

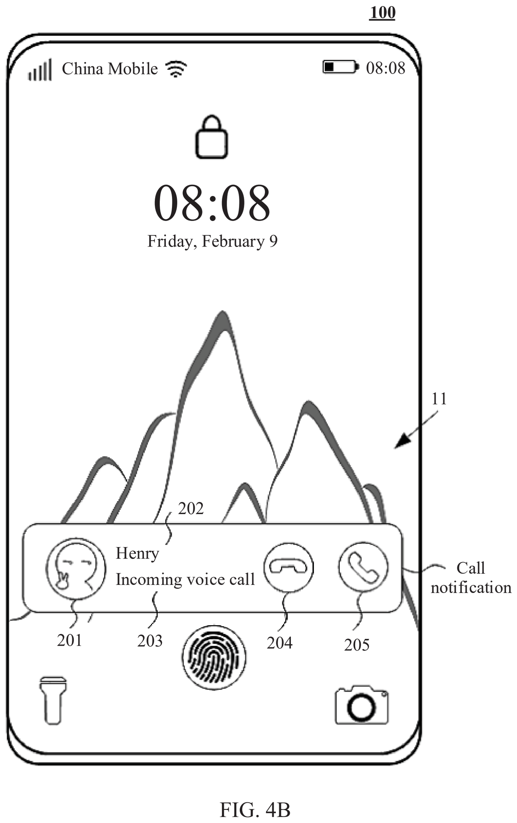

FIG. 4B to FIG. 4D are diagrams of interfaces of a VoIP call notification according to an embodiment of this application;
FIG. 5A-1 and FIG. 5A-2 are a diagram of a called user answering procedure of a VoIP call method according to an embodiment of this application;
FIG. 5B-1 and FIG. 5B-2 to FIG. 5D are diagrams of interfaces of called user answering according to an embodiment of this application;

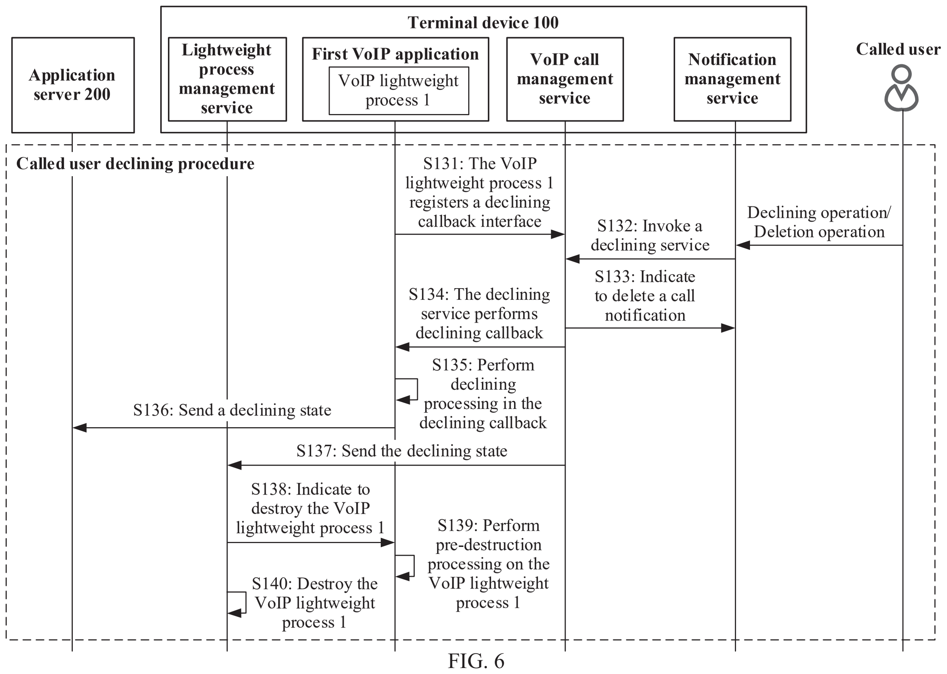

FIG. 6 is a diagram of a called user declining procedure of a VoIP call method according to an embodiment of this application;

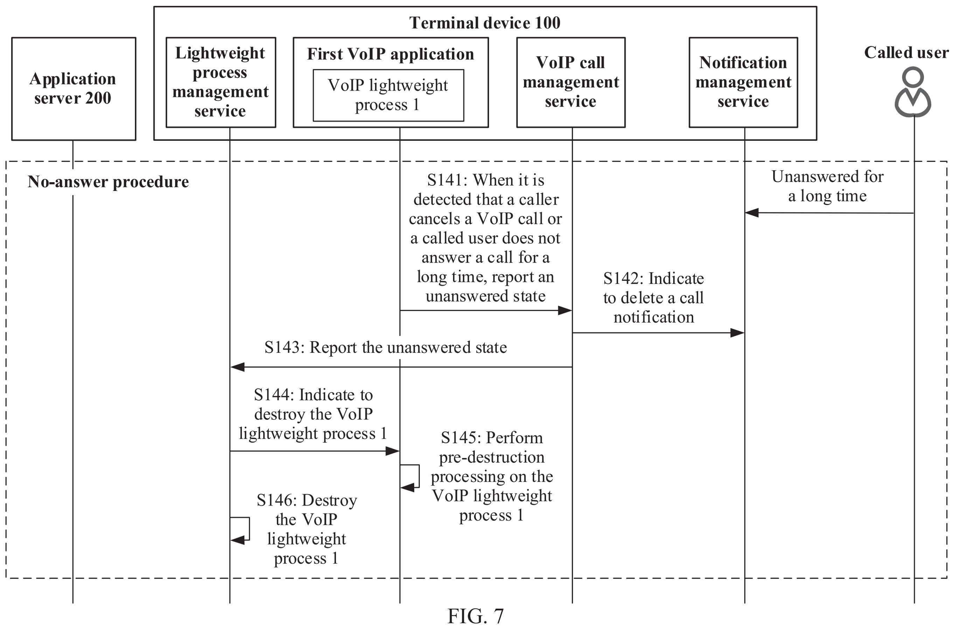

FIG. 7 is a diagram of a no-answer procedure of a VoIP call method according to an embodiment of this application;

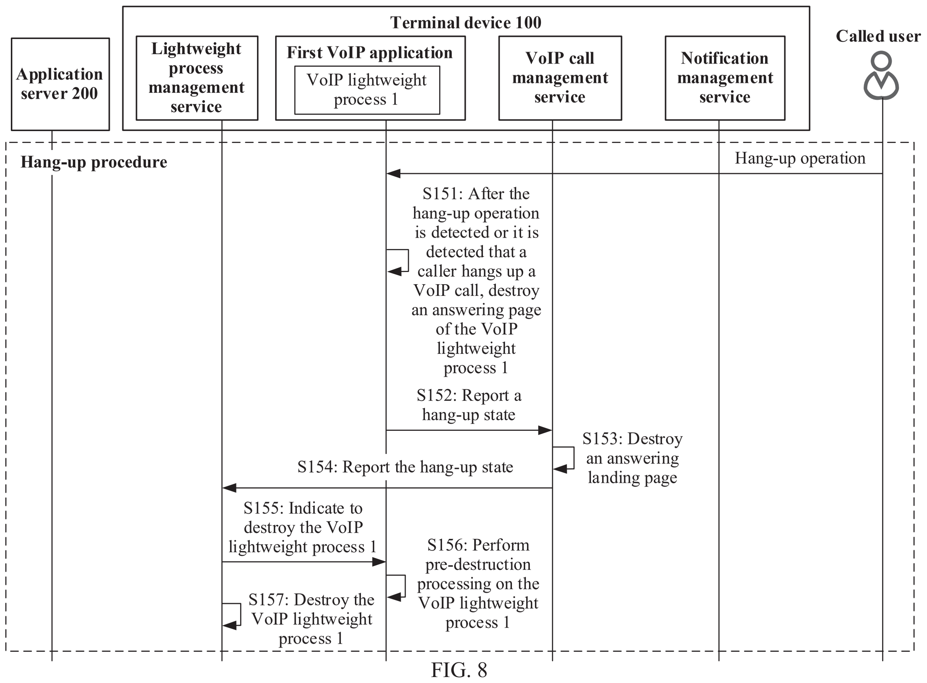

FIG. 8 is a diagram of a call hang-up procedure of a VoIP call method according to an embodiment of this application;

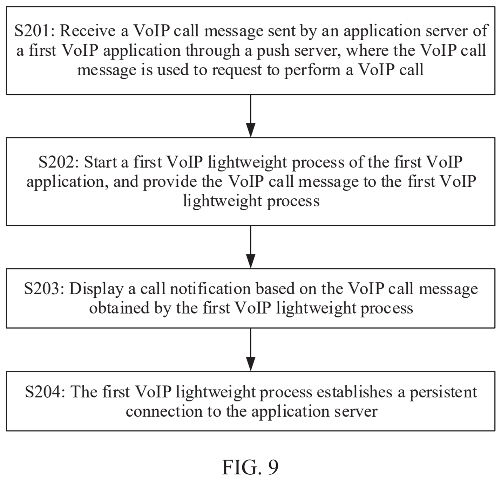

FIG. 9 is a schematic flowchart of a VoIP call method according to an embodiment of this application;

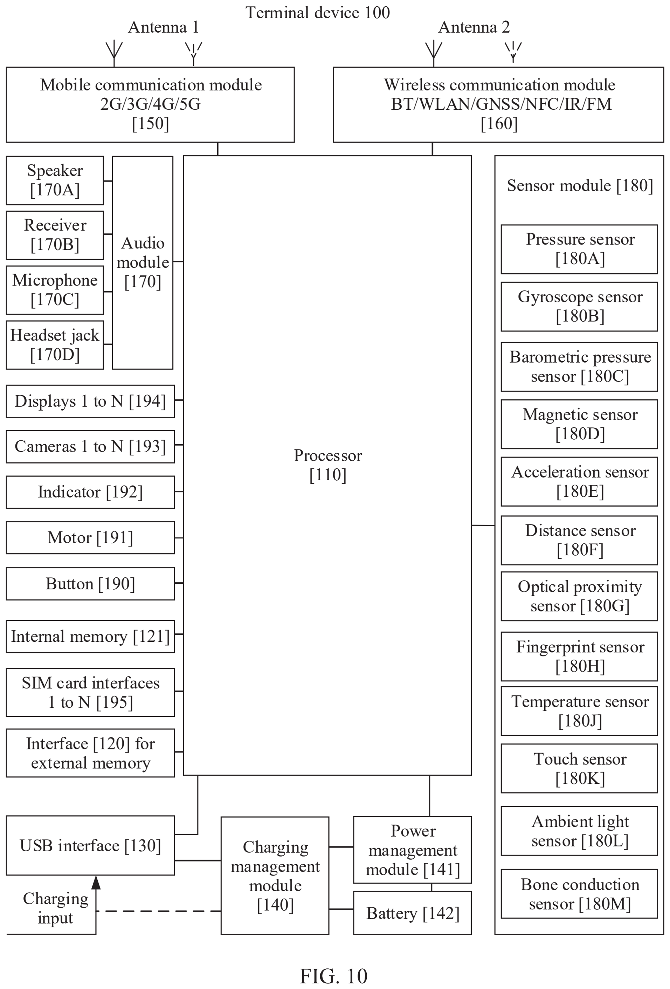

FIG. 10 is a diagram of a structure of a terminal device according to an embodiment of this application; and

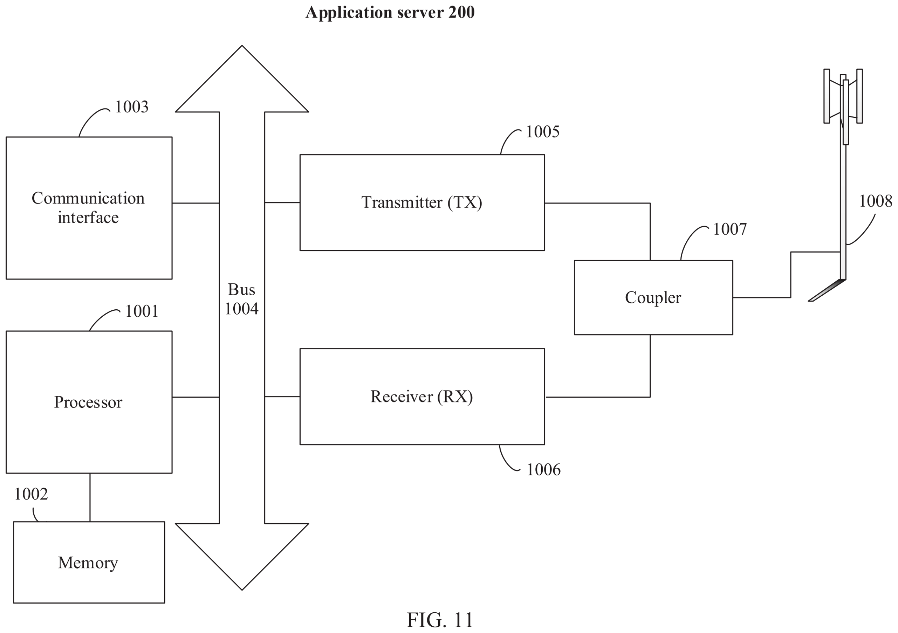

FIG. 11 is a diagram of a structure of an application server according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application program or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a Widget that is displayed on a display of the electronic device.

For ease of understanding, the following describes related concepts in embodiments of this application.

VoIP is a voice call technology that enables voice calls, video calls, and multimedia conferences over the Internet protocol (IP), that is, calls over the Internet. Other informal names include IP telephony (IP telephony), network telephony, internet telephony (Internet telephony), broadband telephony (broadbandtelephony), and broadband telephony service (broadband phone service). VoIP can be used for various Internet access devices, including a VoIP phone, a smart phone, and a personal computer. A voice/video call implemented on a terminal device based on a third-party application is generally a VoIP call.

A VoIP application is an application that can implement a VoIP call. The VoIP application can be an independent application or integrated into another application (like a phone application). The VoIP application may be a system application of the terminal device, or may be a third-party application that can be downloaded, for example, WeCom and MeeTime. The third-party application may be an application pre-installed in the terminal device, or may be an application downloaded by a user and installed in the terminal device.

The following describes a communication system 10 related to a VoIP call method provided in an embodiment of this application.

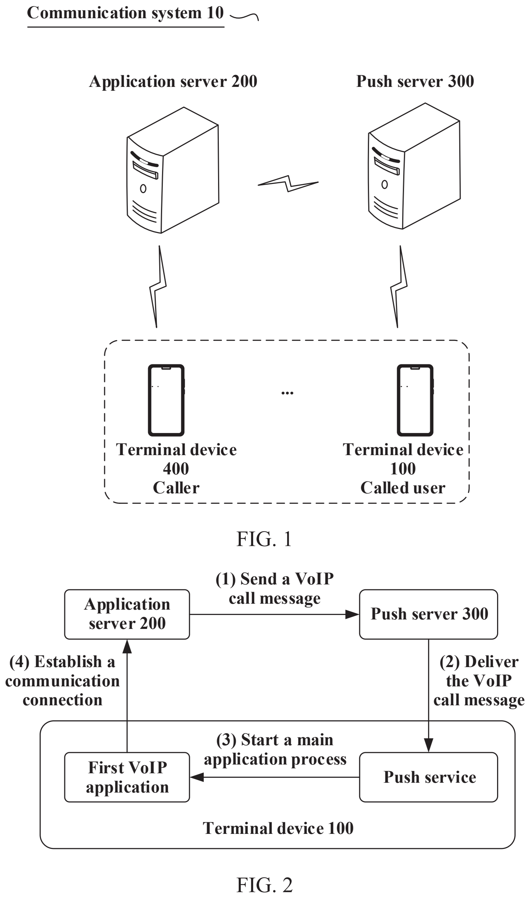

FIG. 1 is an example of a diagram of a system architecture of a communication system 10 according to an embodiment of this application. As shown in FIG. 1, the communication system 10 includes one or more terminal devices (for example, a terminal device 100 and a terminal device 400), one or more application servers (for example, an application server 200), and a push server 300.

A first VoIP application (for example, MeeTime) is installed on the terminal device 100 and the terminal device 400. A user 1 may perform a VOIP call with the first VoIP application of the terminal device 400 of another user (for example, a user 2) through the first VoIP application of the terminal device 100. For example, the terminal device 100 receives a VoIP call from the user 2 that logs in to the first VoIP application of the terminal device 400. The VOIP call is used to request the user 1 to perform a VoIP call. In this case, the user 2 may be referred to as a caller or a calling user, and the user 1 may be referred to as a called user. The following uses the terminal device 100 as an example for description.

A push (Push) service is installed or integrated into the terminal device 100. The push service is configured to receive a message pushed by an application server of each application. The pushed message may be referred to as a push message. It should be noted that, if the first VoIP application of the terminal device 100 enables a push message function, when the terminal device 100 does not run the first VoIP application or runs the first VoIP application in the background, the push service of the terminal device 100 can also receive and display a push message of the first VoIP application from the push server 300.

The application server 200 may be configured to push a message for a first VoIP application installed on each terminal device (for example, the terminal device 100). In some embodiments, the application server 200 may be understood as a service server of the first VoIP application, and is further configured to provide another application service for the first VoIP application. For example, the first VoIP application is MeeTime, and the application server 200 is further configured to provide functions such as sending and receiving messages, holding a conference, and adding a schedule for MeeTime.

The push server 300 may receive the push message sent by each application server, and push the push message to a terminal device installed with a corresponding application, for example, deliver the push message of the first VoIP application to the terminal device 100.

In this embodiment of this application, each terminal device (for example, the terminal device 100 or the terminal device 400) and the application server 200, the application server 200 and the push server 300, and the push server 300 and the terminal device 100 may communicate with each other through a communication network.

The communication network may include a local area network (local area network, LAN) and/or a wide area network (wide area network, WAN). The communication network may be implemented by using any known network communication protocol. The network communication protocol may be various wired or wireless communication protocols, such as Ethernet, a universal serial bus (universal serial bus, USB), a firewire (FIREWIRE), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), NFC, voice over internet protocol (voice over Internet protocol, VoIP), a communication protocol supporting a network slice architecture, or any other suitable communication protocol.

The terminal device 100 and the terminal device 400 each may be a mobile phone, a tablet computer, a desktop computer, a laptop computer, a handheld computer, a notebook computer, an ultra-mobile personal computer (ultra-mobile personal computer, UMPC), or a netbook, or may be a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (for example, a smart band), a vehicle-mounted device, a smart home device (for example, a smart television, a smart screen, or a large-screen device), and/or a smart city device. A specific type of the terminal device 100 and the terminal device 400 is not specially limited in this embodiment of this application.

The application server 200 may be a server, a server cluster including a plurality of servers, or a cloud computing center. Similarly, the push server 300 may be a server, a server cluster including a plurality of servers, or a cloud computing center. Names of the application server 200 and the push server 300 are not specifically limited in this embodiment of this application.

It should be understood that FIG. 1 is merely a diagram of the system structure of the communication system provided in embodiments of this application, and does not constitute a specific limitation on the communication system 10. The communication system 10 may include more or fewer devices than those shown in the figure, for example, may further include a wireless relay device and a wireless backhaul device (not shown in FIG. 1). This is not limited herein.

In a use scenario, when the terminal device 100 switches the first VoIP application to the background, a device system freezes or directly destroys a main application process of the first VoIP application from a perspective of device power consumption. In this case, the first VoIP application disconnects a persistent connection to the application server 200, and the first VoIP application cannot communicate with the application server 200, and therefore cannot receive a VoIP call from another terminal device through the application server 200.

For example, as shown in FIG. 2, according to the VoIP call method provided in this embodiment of this application, the push server 300 provides an interface for sending a VoIP call message for the application server 200. When the terminal device 100 switches the first VoIP application to the background, the application server 200 may use the VoIP call message of the first VoIP application as a push message, and push the push message to the terminal device 100 through the push server 300.

Specifically, (1) when the application server 200 has received a call request of a caller for the user 1 who logs in to the first VoIP application on the terminal device 100, if the application server 200 currently establishes a persistent connection to the first VoIP application of the terminal device 100, the application server 200 directly sends the VoIP call message to the terminal device 100; or if the application server 200 currently does not establish a persistent connection to the first VoIP application of the terminal device 100, the application server 200 sends the VoIP call message to the push server 300; (2) the push server 300 establishes a push persistent connection to the push service of the terminal device 100, and the push server 300 may send the VoIP call message to the push service through the push persistent connection; (3) the push service of the terminal device 100 triggers, based on the VoIP call message, starting of a main application process of the first VoIP application, to send the VoIP call message to the main process of the first VoIP application; and (4) the main application process of the first VoIP application of the terminal device 100 establishes, based on the VoIP call message, a persistent connection to the application server 200, to implement a VoIP call with the caller through the application server 200.

According to the foregoing VoIP call method, when the first VoIP application is switched to the background, the VoIP call message may still be received, to implement the VoIP call of the first VoIP application. However, the foregoing solution further has the following defects: Each time the push service has received the VoIP call message, the main application process of the first VoIP application needs to be woken up; after the main application process is started, the system cannot control behavior of the main application process, and the first VoIP application may execute a service unrelated to the VoIP call; and the system cannot control execution duration of the main application process, and there is a risk that the application abuses the VoIP call to keep the application running continuously. In the foregoing case, device power consumption is increased and memory is wasted. This causes an adverse impact on the terminal device 100, and further affects user experience.

In addition, in the foregoing solution, when the caller cancels the call, and the called user does not answer the call for a long time or hangs up after answering the call, and when it is considered that the user may currently still use the main application process in the foreground or the background of the terminal device 100, the main process cannot be directly destroyed, and the following two processing manners may be used. Manner 1: The main application process is not controlled, and the main application process continues to run. Manner 2: The main application process is frozen. Manner 1 has a great impact on device power consumption and memory. Manner 2 also has an impact on the memory of the device, and the memory is still occupied when the device is frozen.

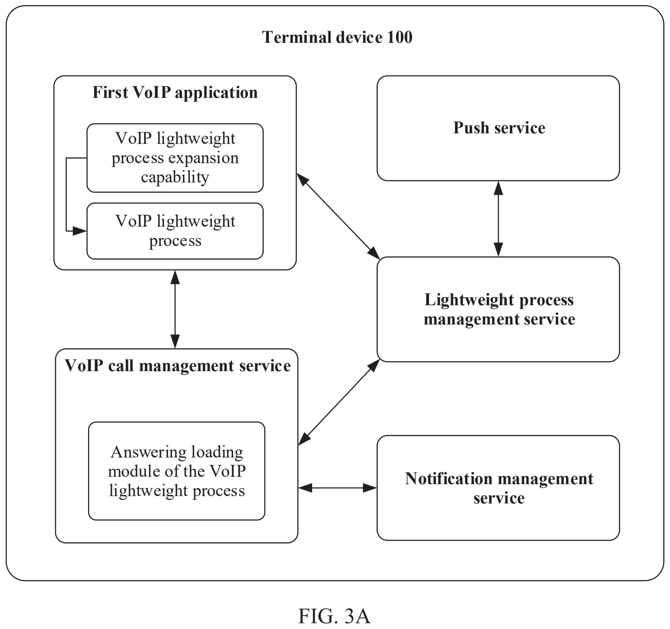

For example, as shown in FIG. 3A, in another VoIP call method provided in this embodiment of this application, the terminal device 100 includes a first VoIP application and a push service, and further includes a lightweight process management service, a VoIP call management service, and a notification management service.

Different from the VoIP call method shown in FIG. 2, after receiving the VoIP call message from the push server 300, the push service of the terminal device 100 sends the VoIP call message to the lightweight process management service.

The lightweight process management service is responsible for receiving the VoIP call message from the push service, triggering the first VoIP application to start a VoIP lightweight process, and sending the VoIP call message to the lightweight process for processing, to implement a VoIP call. The lightweight process management service is further responsible for managing a life cycle of the VoIP lightweight process, that is, controlling the VoIP application to destroy the VoIP lightweight process in time when call duration is excessively long because a user does not answer a VoIP call, a caller cancels a VoIP call, a user declines a VoIP call, a user hangs up a VoIP call after the user answers the VoIP call, or the like. The lightweight process management service is further responsible for managing an API access permission of the VoIP lightweight process, to control behavior that can be implemented by the VoIP lightweight process.

The VoIP lightweight process is an independent process configured to implement the VoIP call, and is isolated from the main application process. In embodiments of this application, the lightweight process may also be referred to as another name, for example, a subprocess.

The first VoIP application inherits a VoIP lightweight process extension capability in a development state. In a running state, the VoIP lightweight process may be run based on the capability, and the VoIP lightweight process is supported to receive the VoIP message in the background. The VoIP call message is processed in the VoIP lightweight process, to implement the VoIP call. The foregoing processing includes establishing a persistent connection to the application server 200, interconnecting with the VoIP call management service to report a call status, loading a VoIP call answering page, and the like. In this embodiment of this application, the answering page may also be referred to as an answering interface.

In some embodiments, the VoIP lightweight process extension capability inherited by the first VoIP application has a part or all of the following feature capabilities:
(1) Independent VoIP lightweight process. When the VoIP lightweight process extension capability run by the first VoIP application is invoked, the lightweight process configured to implement the VoIP call may be started, where the process is isolated from the main application process.
(2) Restricted APIs that can be invoked. The APIs that can be invoked by the VoIP lightweight process that is started when the VoIP lightweight process extension capability is invoked are strictly restricted, and APIs that are unrelated to VoIP behavior can be disabled. In an implementation, an API that can be invoked by using the VoIP lightweight process extension capability is set based on a preset API trustlist, or an API that is prohibited to be invoked by using the VoIP lightweight process extension capability is set based on a preset API blocklist.
(3) Supporting background startup and background messages reception. The first VoIP application is supported to invoke the VoIP lightweight process extension capability to start the VoIP lightweight process when the first VoIP application is run in the background. The VoIP lightweight process extension capability provides a callback method for receiving a background message, so that the first VoIP application can implement, according to the callback method, that the VoIP lightweight process receives the VoIP call message in the background. In this embodiment of this application, "startup" may also be referred to as "start".
(4) Supporting foreground loading. The first VoIP application may implement, in the VoIP lightweight process extension capability, processing of related foreground services such as a call notification and an answering page, and the call interface and the answering page may be subsequently loaded to the foreground, for displaying, by an answering loading module of the VoIP lightweight process.

The VoIP call management service includes the answering loading module of the VoIP lightweight process. The answering loading module is responsible for receiving the call status reported by the VoIP lightweight process, interconnecting with the notification management service to display the call notification, and processing users' operations of answering or declining VoIP calls. In addition, the answering loading module is further responsible for supporting cross-process loading of the answering page of the VoIP lightweight process and rendering the answering page to the VoIP call management service.

The notification management service is configured to display a VoIP call notification and support display of controls such as an answering button and a declining button.

According to the VoIP call method provided in this embodiment of this application, the push service implements the VoIP call by waking up the VoIP lightweight process of the VoIP application, and completes closed-loop of procedures such as calling, answering, declining, and hang-up of the VoIP call in the VoIP lightweight process. In the entire procedure, the main application process does not need to be started, so that impact on device power consumption and memory is reduced. The life cycle of the VoIP lightweight process is managed, so that a risk that the VoIP application abuses the VoIP call to keep the process running continuously is eliminated, and power consumption and occupied memory are further reduced. The API access permission of the VoIP lightweight process is managed, so that the first VoIP application may be prevented from performing behavior unrelated to the VoIP call. In addition, the user is unaware of background processing of the VoIP lightweight process, to avoid affecting user experience.

The following describes a software structure of the terminal device 100 in embodiments of this application.

A software system of the terminal device 100 may use a layered architecture, an event-driven architecture, a microkernel architecture, a microservice architecture, or a cloud architecture. In embodiments of this application, an Android system with a layered architecture is used as an example to describe a software structure of the terminal device 100. The terminal device 100 is not limited to the Android system, and may also use another software system.

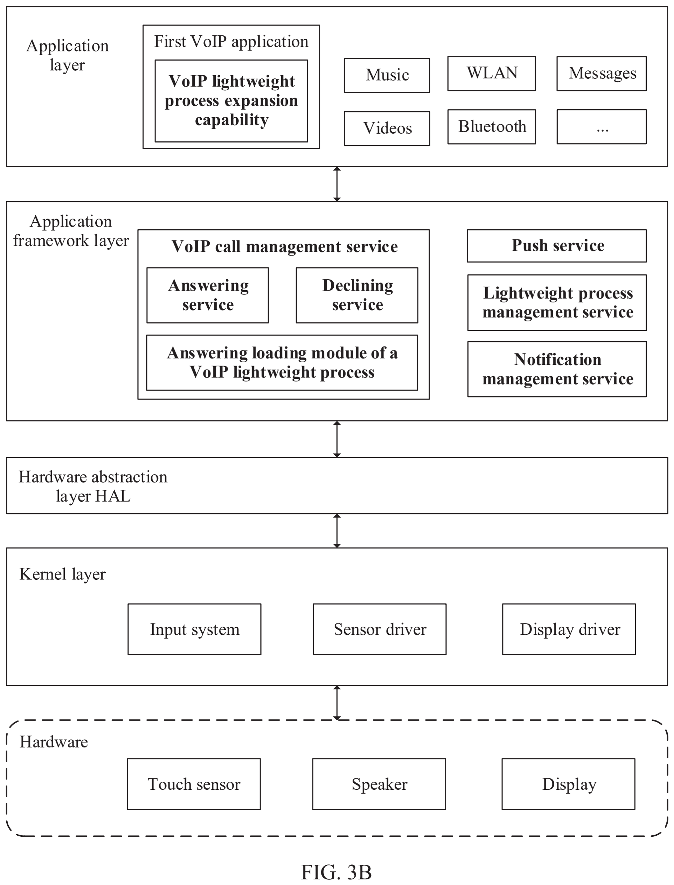

FIG. 3B is a block diagram of a software structure of a terminal device 100 according to an embodiment of this application;
In a layered architecture, software is divided into several layers, and each layer has a clear role and task. The layers communicate with each other through a software interface. In some embodiments, the Android system may be divided from top to bottom into an application layer, an application framework layer, a hardware abstraction layer (hardware abstraction layer, HAL) layer, and a kernel (kernel) layer.

Specifically, the application layer may include a series of application packages. As shown in FIG. 3B, the application layer may include a first VoIP application, for example, MeeTime or WeCom, and may further include another application like Camera, Gallery, Calendar, Call, WLAN, Bluetooth, Music, Videos, and Messages.

In some embodiments, a subclass is developed for the first VoIP application in a development state, and a VoIP lightweight process extension capability is inherited in the subclass. In other words, an application package (Android application package, APK) of the first VoIP application integrates a program file of the VoIP lightweight process extension capability. The software system of the terminal device 100 has a bottom-layer support module of the VoIP lightweight process extension capability, and supports, after the first VoIP application is installed on the terminal device 100, the first VoIP application in a running state to run, based on the capability, a VoIP lightweight process independent of a main application process, to implement a VoIP call. For details, refer to FIG. 3A and related descriptions in subsequent embodiments. Details are not described herein again. The application framework layer provides an application programming interface (application programming interface, API) and a programming framework for an application at the application layer. The application framework layer includes some predefined functions.

As shown in FIG. 3B, the application framework layer may include a push service, a VoIP call management service, a lightweight process management service, and a notification management service. The application framework layer may further include a window manager, a content provider, a view system, a phone manager, a resource manager, and the like. In some embodiments, the VoIP call management service and the lightweight process management service may also be integrated into a software module.

A notification management service may start an application to display notification information in a status bar, and may be configured to convey a notification type message. The displayed notification information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert sound is played, the electronic device vibrates, or the indicator light blinks.

In this embodiment of this application, the notification management service may be configured to display a call notification of a VoIP call message on a lock screen interface and a non-lock screen interface. A user may answer or decline a VoIP call based on the call notification displayed by the notification management service, or may delete the call notification. For functions of the push service, the VoIP call management service, the lightweight process management service, and the notification management service, refer to related descriptions in FIG. 3A and subsequent embodiments. Details are not described herein again.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on a virtual machine. The virtual machine executes java files of the application layer and the application framework layer as binary files. The virtual machine is configured to implement functions such as object lifecycle management, stack management, thread management, security and exception management, and garbage collection.

The HAL layer and the kernel lay are configured to perform a corresponding operation in response to a function invoked by the system service in the application framework layer.

The kernel layer is a layer between hardware and software. The kernel layer may include an input system, a sensor driver, and a display driver, and may further include an audio driver, a camera driver, and the like. The input system is configured to listen to an input operation of the user, for example, an operation of answering, answering, or hanging up a VoIP call, and an operation of deleting the call notification.

For example, the display driver may drive a display to display the VoIP call notification and the answering page of the VoIP call. The sensor driver may drive a sensor (for example, a touch sensor) to detect an input operation (for example, an answering operation, a declining operation, or a hang-up operation) of the user. The audio driver may drive a microphone to collect voice data of the user for the VoIP call. The camera driver may drive a camera to collect a video image for the VoIP call.

The following describes in detail specific implementations of the VoIP call method provided in embodiments of this application.

In some embodiments, after the push server 300 sends the VoIP call message to the push service of the terminal device 100, the push service starts a VoIP lightweight process 1 of the first VoIP application based on the lightweight process management service, and completes procedures such as VoIP call notification displaying, answering, and declining in combination with the VoIP call management service.

For example, FIG. 4A-1 to FIG. 4A-3 show a VoIP call method according to an embodiment of this application. The method includes a lightweight process startup procedure, and the procedure includes but is not limited to a part or all of step S101 to step S109.

S101: An application server 200 sends a VoIP call message 1 to a push server 300.

The VoIP call message 1 is used to request to perform a VoIP call, and the VoIP call message 1 may include a part or all of the following: a message identifier (identity, ID), an account of a caller, an avatar of the caller, a name of the caller, an account of a called user, and the like.

S102: The push server 300 sends the VoIP call message 1 to a push service of the terminal device 100.

In some embodiments, a user 2 logs in to a first VoIP application of a terminal device 400, and the user 2 may perform a VoIP call (for example, a voice call or a video call) to a user 1 based on the first VoIP application, that is, initiate a VoIP call, to trigger the terminal device 400 to send the VoIP call message 1 to the application server 200 of the first VoIP application. If the application server 200 detects that no persistent connection is currently established to the terminal device 100 of the user 1, the application server 200 requests the push server 300 to push the VoIP call message 1 to the terminal device 100 through the push persistent connection.

S103: The push service of the terminal device 100 sends the VoIP call message 1 to a lightweight process management service.

In some embodiments, after receiving the VoIP call message 1, the push service of the terminal device 100 verifies validity of the message, performs deduplication processing on the message, and rejects a repeated VoIP call message 1. Then, the push service sends, to the lightweight process management service, the VoIP call message 1 on which verification succeeds. Specific implementations of verifying validity of the message and performing deduplication on the message are not specifically limited in this embodiment of this application.

In this embodiment of this application, after having received the VoIP call message 1, the lightweight process management service may perform one or more of step S104, step S106, step S107, and step S109.

S104: The lightweight process management service of the terminal device 100 sends indication information 1 to a VoIP call management service, where the indication information 1 indicates the VoIP call message 1, to notify the VoIP call message 1 to the call management service in advance.

S105: The VoIP call management service stores the indication information 1, where the indication information 1 is subsequently used to verify validity of incoming call information of the VoIP call message 1.

In an implementation, the indication information 1 includes a message ID of the VoIP call message 1.

S106: The lightweight process management service of the terminal device 100 invokes a VoIP lightweight process extension capability of the first VoIP application, to start a VoIP lightweight process 1 of the first VoIP application, and send the VoIP call message 1 to the VoIP lightweight process 1.

S107: When the VoIP lightweight process 1 of the first VoIP application is started, load, based on an API blocklist, an API that can be invoked by the VoIP lightweight process.

In some embodiments, the lightweight process management service manages an API blocklist that is prohibited to be invoked by using the VoIP lightweight process extension capability (that is, an API blocklist that is prohibited to be invoked by the VoIP lightweight process). When the lightweight process management service invokes the VoIP lightweight process extension capability of the first VoIP application, to start the VoIP lightweight process 1, an API in the API blocklist is not loaded to process space of the VoIP lightweight process 1. In other words, the VoIP lightweight process 1 cannot invoke the API in the API blocklist. In an implementation, the lightweight process management service obtains an API general list; and when the VoIP lightweight process 1 is started, an API that is other than the API in the API blocklist and that is in the API general list is loaded to the process space of the VoIP lightweight process 1.

In some other embodiments, the lightweight process management service may also manage an API trustlist that can be invoked by using the VoIP lightweight process extension capability. When the lightweight process management service invokes the VoIP lightweight process extension capability of the first VoIP application, to start the VoIP lightweight process 1, an API in the API trustlist is loaded to the process space of the VoIP lightweight process 1. The VoIP lightweight process 1 cannot invoke an API that is not in the API trustlist.

The lightweight process management service manages the API blocklist/API trustlist, so that behavior of the first VoIP application in the VoIP lightweight process can be restricted, and an operation unrelated to the VoIP call cannot be performed on the first VoIP application.

S108: The first VoIP application runs the VoIP lightweight process 1, and the VoIP lightweight process 1 receives the VoIP call message 1.

In some embodiments, the first VoIP application may implement a method for receiving a background message in a subclass of the VoIP lightweight process extension capability, and the VoIP lightweight process 1 may successfully receive, in the background by using the method, the VoIP call message 1 sent by the lightweight process management service.

S109: The lightweight process management service of the terminal device 100 enables a life cycle timer 1, where timing duration of the timer is preset duration 1.

In some embodiments, when successfully starting the VoIP lightweight process 1 of the first VoIP application, the lightweight process management service enables the life cycle timer 1 by using an application package name of the first VoIP application and the message ID of the VoIP call message 1 as a granularity identifier, or enables the life cycle timer 1 by using the message ID as a granularity identifier. When the timer is triggered, the lightweight process management service forcibly destroys the VoIP lightweight process 1.

In some embodiments, the lightweight process management service performs step S109 after performing step S106 (that is, invoking the VoIP lightweight process extension capability to start the VoIP lightweight process 1). In some embodiments, after performing step S106, the lightweight process management service performs S109 only when having received acknowledgment information fed back by the VoIP lightweight process 1, where the acknowledgment information indicates that the VoIP lightweight process 1 is successfully started.

As shown in FIG. 4A-1 to FIG. 4A-3, after starting the VoIP lightweight process 1 and receiving the VoIP call message 1, the first VoIP application may trigger a call notification for displaying the call message. The VoIP call method further includes a call notification display procedure, and the procedure includes but is not limited to a part or all of step S110 to step S119.

S110: The VoIP lightweight process 1 of the first VoIP application establishes a communication connection to the application server 200.

In some embodiments, the communication connection is a persistent connection. After the VoIP lightweight process 1 is started, the VoIP lightweight process 1 of the first VoIP application may establish a persistent connection with the application server 200 in advance by using the method for receiving the VoIP lightweight process extension capability. In this way, based on the call notification of the VoIP call message 1, after the user answers the incoming call of the VoIP call message 1, the first VoIP application can quickly implement a VoIP call with the caller through the persistent connection established in advance, and user experience is better.

S111: Before the life cycle timer 1 is triggered, the VoIP lightweight process 1 of the first VoIP application reports incoming call information 1 of the VoIP call message 1 to the VoIP call management service, to request the VoIP call management service to display the call notification of the VoIP call message 1, where the incoming call information 1 is used to determine display content of the call notification.

In some embodiments, the incoming call information may include a part or all of the following: the message ID of the VoIP call message 1, a caller avatar, a caller name, call notification content, an answering button, a declining button, and the like.

S112: The VoIP call management service verifies validity of the incoming call information 1 based on the indication information 1, and if the incoming call information 1 is valid, performs S113.

In some embodiments, the incoming call information 1 includes the message ID of the VoIP call message. When the message ID in the incoming call information 1 is the same as the message ID in the indication information 1, it is determined that the incoming call information 1 is valid; otherwise, the incoming call information 1 is invalid.

In the foregoing step S104, the lightweight process management service notifies the VoIP call management service of the indication information 1 of the VoIP call message 1 in advance, so that in step S112, a security check is performed on the incoming call information 1 of the VoIP call message 1 sent by the first VoIP application, to prevent the first VoIP application from maliciously requesting to display a call notification of an abnormal procedure.

Step S104, step S105, and step S112 are optional.

S113: Based on the incoming call information 1, the VoIP call management service requests a notification management service to display the call notification of the VoIP call message 1.

The display content of the call notification may include one or more of the following: a caller portrait and a caller name, a call notification title and call notification content, an answering button, a declining button, and the like. In some embodiments, the VoIP call management service sends the incoming call information 1 to the notification management service, and the notification management service displays the call notification of the VoIP call message 1 based on the incoming call information 1.

In some embodiments, the notification management service supports displaying the call notification on a lock screen, and supports answering without unlocking, so that the user can answer the VoIP call more quickly.

For example, as shown in FIG. 4B, before step S113, the terminal device 100 displays a lock screen interface 11, and after step S113, the notification management service triggers the terminal device 100 to display the call notification on the lock screen interface 11. The call notification includes a caller avatar 201 and a name 202, call notification content 203, an answering button 205, and a declining button 204. As shown in FIG. 4B, if the caller makes a voice call based on the first VoIP application, the call notification content 203 may be "Incoming voice call". If the caller makes a video call based on the first VoIP application, the call notification content 203 may further be "Incoming video call".

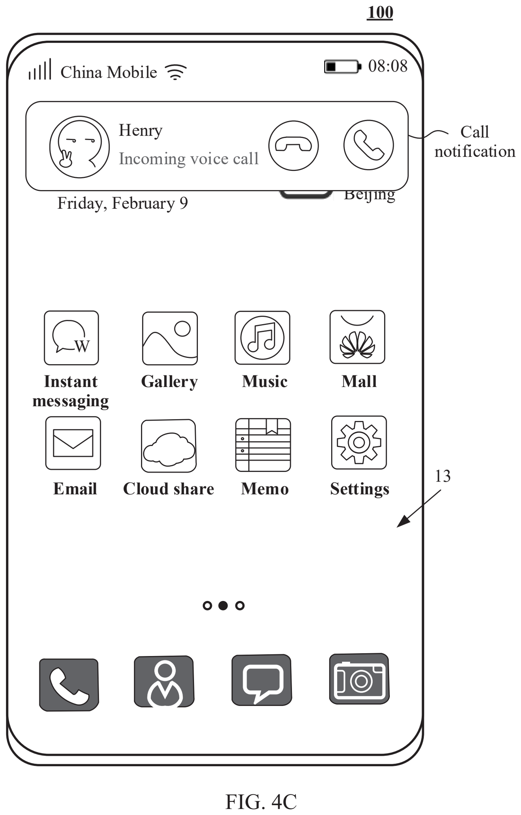

For example, as shown in FIG. 4C, before step S113, the terminal device 100 displays a non-lock screen interface (for example, a home screen 13), and after step S113, the notification management service triggers the terminal device 100 to display the call notification on the non-lock screen interface.

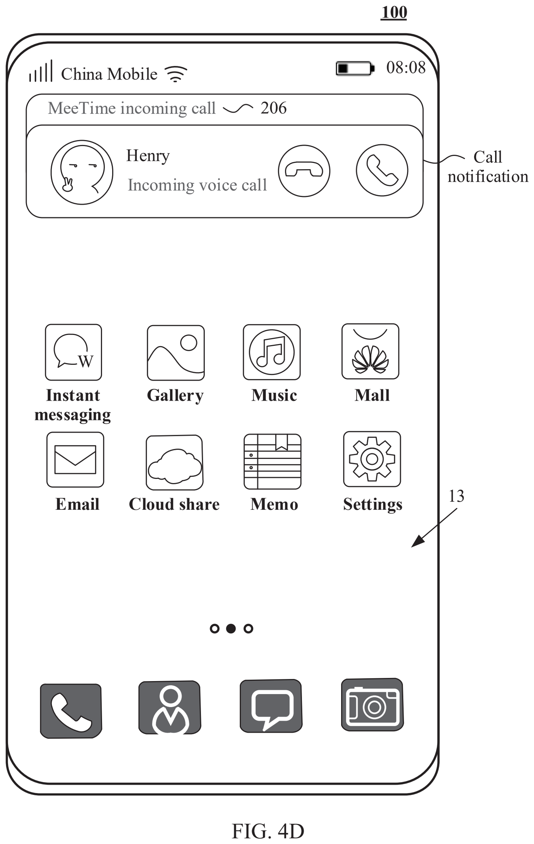

For example, as shown in FIG. 4D, the display content of the call notification may further include a call notification title 206. For example, the first VoIP application is MeeTime, and the call notification title 206 is "MeeTime incoming call".

S114: The VoIP call management service reports a call status to the lightweight process management service, where the call status indicates that the call notification of the VoIP call message 1 is displayed.

In some embodiments, the message ID of the VoIP call message 1 is further reported along with the call status, to indicate that the call status is specific to the VoIP call message 1.

In some embodiments, the VoIP call management service performs step S114 after performing step S113. In some embodiments, after performing step S113, the VoIP call management service performs S114 only when having received acknowledgment information fed back by the notification management service, where the acknowledgment information indicates that the call notification is displayed.

S115: If the call status has been received before the foregoing life cycle timer 1 is triggered, the lightweight process management service disables the life cycle timer 1 corresponding to the VoIP call message 1.

S116: If the call status has not been received before the life cycle timer 1 is triggered, trigger the life cycle timer 1 when the life cycle timer 1 expires.

Before the life cycle timer 1 expires (that is, before timeout), if the lightweight process management service receives the call status, it is considered that the first VoIP application completes call notification displaying of the VoIP call message 1 within specified time. In this case, the life cycle timer 1 corresponding to the VoIP call message 1 is destroyed, so that the VoIP lightweight process 1 corresponding to the VoIP call message 1 may remain valid until the call ends, or another condition triggers destruction of the VoIP lightweight process. Otherwise, when the life cycle timer 1 expires, the life cycle timer 1 is triggered, and the lightweight process management service destroys the VoIP lightweight process 1.

In some embodiments, an identifier of the life cycle timer 1 includes the message ID of the VoIP call message 1, and the life cycle timer 1 corresponding to the VoIP call message 1 may be determined based on the message ID of the VoIP call message 1.

S117: When the life cycle timer 1 is triggered, the lightweight process management service indicates to destroy the VoIP lightweight process 1 of the first VoIP application.

In step S117, the lightweight process management service indicates the VoIP lightweight process 1 of the first VoIP application to be destroyed, and indirectly indicates to perform pre-destruction processing on the VoIP lightweight process 1. Alternatively, in step S117, the lightweight process management service may also directly indicate to perform pre-destruction processing on the VoIP lightweight process 1. It may be understood that, a function of the life cycle timer 1 corresponding to the VoIP call message 1 is: restricting that the first VoIP application needs to invoke, within specified time (that is, the preset duration 1), an interface of the VoIP call management service to report the incoming call information of the VoIP call message 1. Otherwise, the VoIP lightweight process 1 corresponding to the VoIP call message 1 is destroyed. In this embodiment of this application, the VoIP application can be prevented from maliciously executing the VoIP lightweight process in the background for a long time based on the VoIP call message.

S118: Perform pre-destruction processing on the VoIP lightweight process 1 of the first VoIP application.

Step S117 and step S118 are optional. In some embodiments, before the destruction, the VoIP lightweight process 1 is notified that the pre-destruction processing needs to be performed as soon as possible, to avoid loss of important data in the process. For example, the foregoing pre-destruction processing includes backing up important preset data in the VoIP lightweight process 1.

S119: The lightweight process management service destroys the VoIP lightweight process 1.

In some embodiments, when indicating to perform the pre-destruction processing on the VoIP lightweight process 1, the lightweight process management service further enables a timer 2; and the lightweight process management service performs S119 when the timer 2 expires.

In some embodiments, the VoIP lightweight process 1 feeds back acknowledgment information to the lightweight process management service after the pre-destruction processing is performed, where the acknowledgment information indicates that the pre-destruction processing is completed; and the lightweight process management service performs S119 based on the acknowledgment information.

In this embodiment of this application, the first VOIP application completes a function of the VoIP call procedure in the VoIP lightweight process based on the VoIP lightweight process extension capability, and a main application process does not need to be started in the call process, so that device power consumption and required occupied memory are reduced. In addition, the following constraints are implemented technically: (1) The API unrelated to the VoIP call is disabled, so that the first VOIP application does not perform behavior unrelated to the VoIP call after the VoIP lightweight process is started, to further reduce impact on device power consumption, memory, and the like. (2) The first VOIP application needs to report the incoming call information to the VoIP call management service within the specified time; otherwise, the VoIP lightweight process is forcibly destroyed. This restricts behavior of the first VOIP application, and prevents a risk that the first VOIP application continuously is run in the background based on the VoIP lightweight process extension capability. Destruction of the VOIP lightweight process is not perceived by the user, so that deterioration of user experience is avoided.

For example, as shown in FIG. 5A-1 and FIG. 5A-2, after the notification management service displays the call notification of the VoIP call message 1, the called user (that is, the user of the terminal device 100) may answer the VoIP call. The VoIP call method further includes a called user answering procedure, where the procedure includes but is not limited to a part or all of step S121 to step S128.

S121: In response to an answering operation of the user, the notification management service starts an answering service of the VoIP call management service.

As shown in FIG. 5A-1 and FIG. 5A-2, the notification management service displays the call notification of the VoIP call message 1, and detects the answering operation of the user; and in response to the answering operation, the notification management service starts the answering service of the VoIP call management service. The call notification includes an answering button. The answering operation may be a touch operation of tapping the answering button, or may be another operation, for example, an answering operation implemented through a voice, a gesture, or a connected Bluetooth headset. This is not specifically limited herein.

S122: The answering service of the VoIP call management service creates a full-screen window, and displays an answering landing page in the full-screen window.

In some embodiments, the answering landing page is non-transparent. In some embodiments, transparency of the answering landing page is a preset value, and may be translucent visually. The answering landing page can be regarded as a blank page.

S123: The answering service of the VoIP call management service invokes an answering loading module of the VoIP lightweight process in the answering landing page.

S124: The answering loading module invokes the VoIP lightweight process 1 of the first VoIP application according to a cross-process loading mechanism.

In some embodiments, in step S121, the notification management service sends the message ID of the VoIP call message 1 to the answering service of the VoIP call management service; in step S122, the answering service creates the full-screen window corresponding to the message ID; and in step S123, the answering service sends the message ID to the answering loading module, and the answering loading module invokes, to the first VoIP application according to the cross-process loading mechanism, the VoIP lightweight process 1 corresponding to the message ID.

S125: The VoIP lightweight process 1 loads an answering page of the VoIP call message 1, where the answering page indicates that the VoIP call is in progress.

In some embodiments, the display content of the answering page may include one or more of the following: a caller portrait and a caller name, call duration, a hang-up button, and the like. It may be understood that the call duration and the hang-up button may indicate that the VoIP call is in progress.

S126: The answering loading module renders the answering page to the answering landing page according to the cross-process loading mechanism.

S127: The answering loading module sends, for displaying, the answering landing page obtained by rendering the answering page.

In some embodiments, the cross-process loading mechanism is used to restrict the first VoIP application to display the answering page based on a specification of the full-screen answering landing page, and perform subsequent hang-up processing. As shown in FIG. 5B-1 and FIG. 5B-2, when the first VoIP application is run in the background, according to the cross-process loading mechanism, the answering loading module renders, to the full-screen answering landing page, the answering page loaded by the VoIP lightweight process 1, and displays a rendered page. After the page is displayed, the call notification displayed by the terminal device 100 is switched to an answering page 14 from a visual perspective of the user, and the user cannot perceive the answering landing page. It may be understood that, if the answering page is not successfully loaded, the user may see that a non-transparent page covers the screen.

S128: When loading the answering page, the VoIP lightweight process 1 of the first VoIP application performs a call operation with the application server 200 for the VoIP call message 1, where the call operation is used to implement the VoIP call with the caller of the VoIP call message 1.

Specifically, the VoIP lightweight process 1 communicates with the application server 200 through the persistent connection established in advance, to implement the VoIP call with the caller of the VoIP call message 1. In an implementation, performing the call operation includes: The VoIP lightweight process 1 sends an acknowledgment message to the application server 200 to indicate that the user answers the call; the application server 200 sends an acknowledgment message to the terminal device 400 of the caller; the first VoIP application of the terminal device 400 collects audio and video data of the caller, and sends the audio and video data to the VoIP lightweight process 1 of the terminal device 100 through the application server 200; the VoIP lightweight process 1 plays the audio and video data of the caller on the answering page; and the terminal device 100 collects audio and video data of the called user, and sends the audio and video data to the first VoIP application of the terminal device 400 through the application server 200.

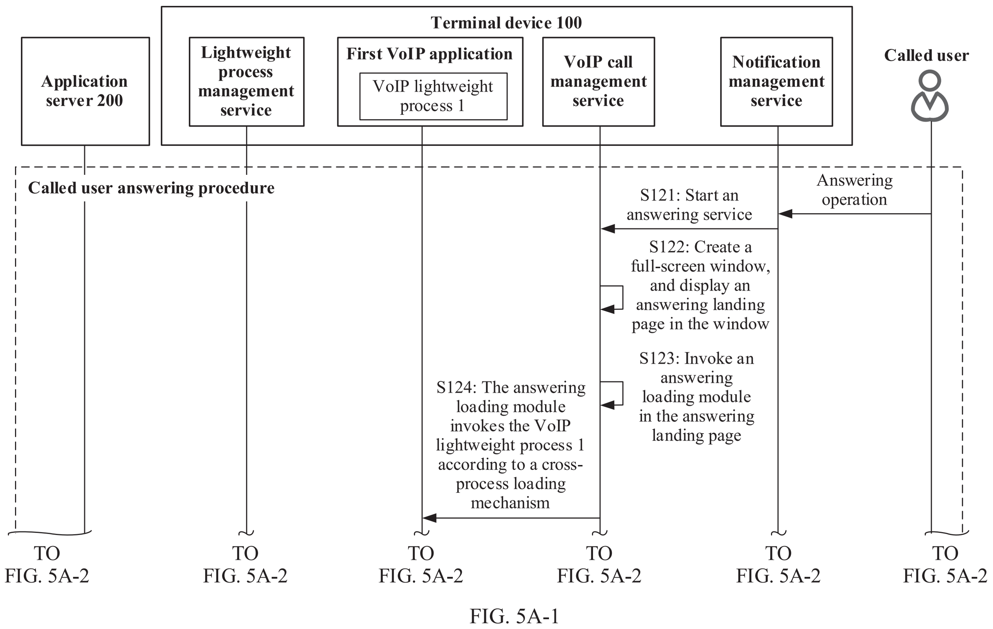

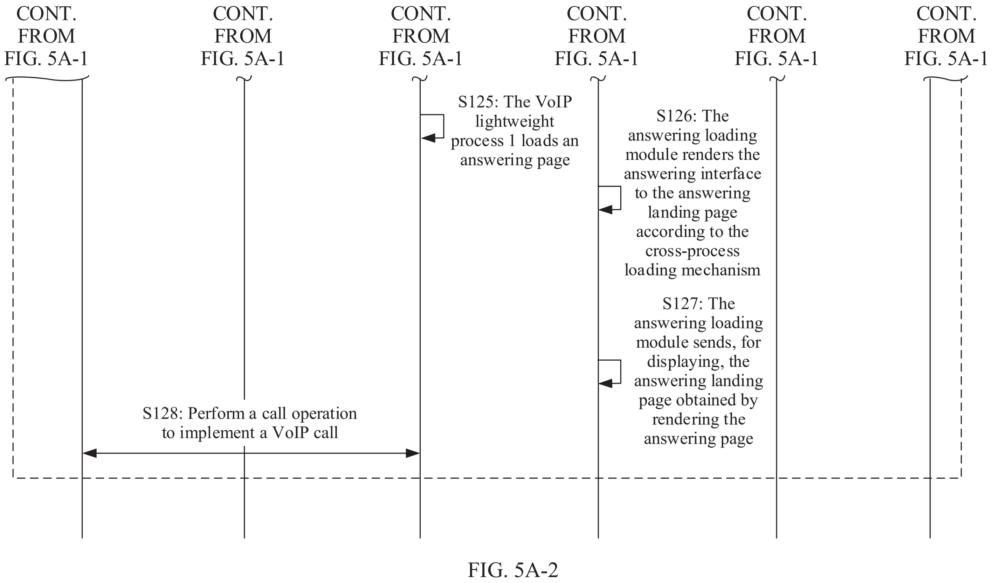

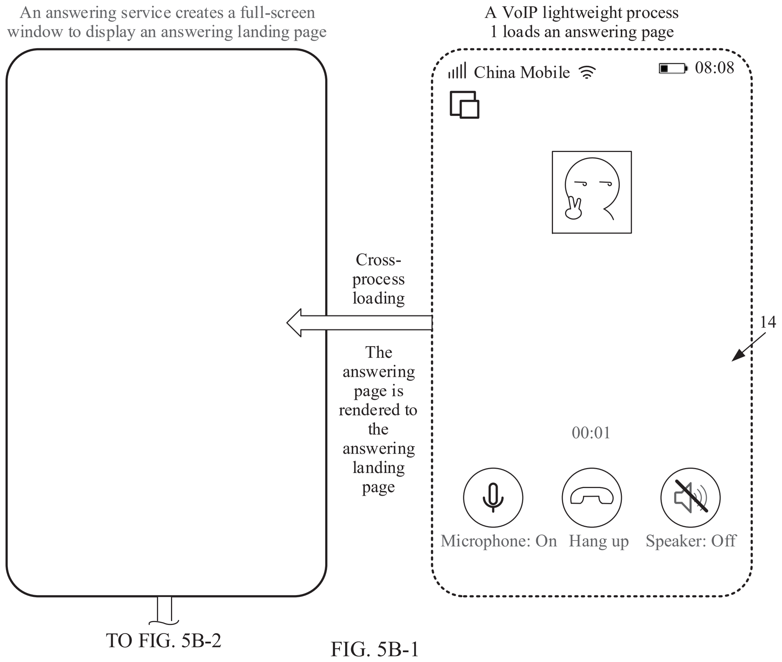

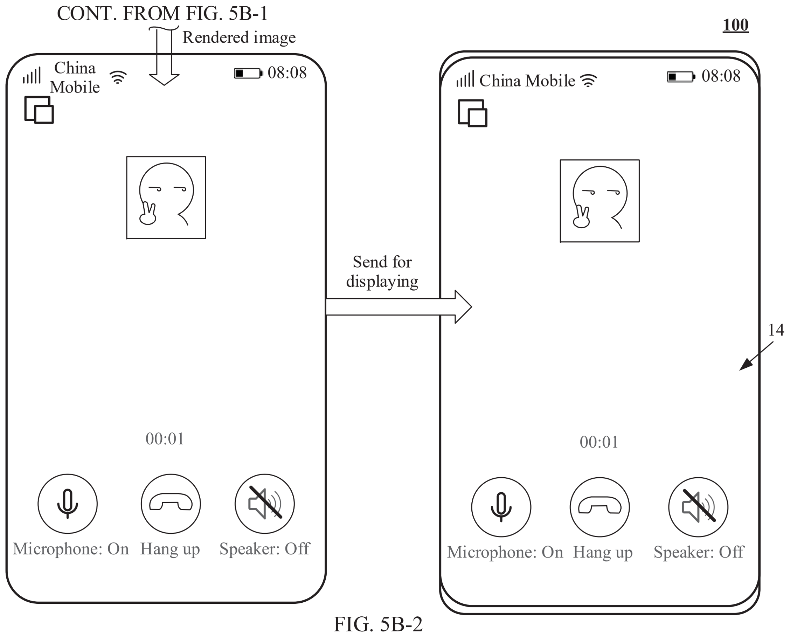

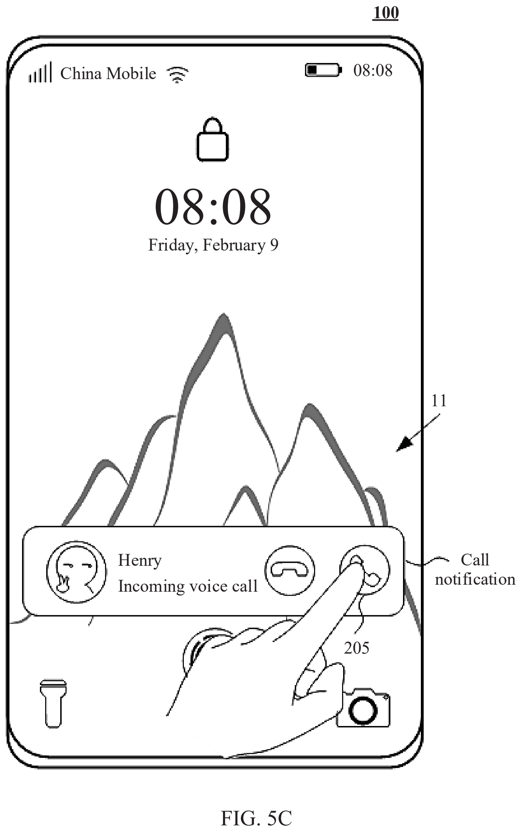

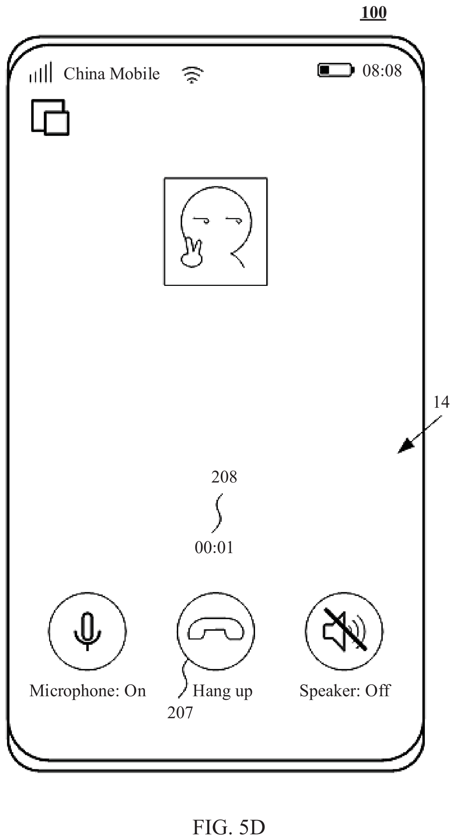

For example, FIG. 5C and FIG. 5D show examples of user interfaces for answering the VoIP call by the user.

The call notification shown in FIG. 5C is used as an example. When it is detected that the user taps the answering button 205, the call notification displayed by the terminal device 100 is changed to the answering page 14, where the answering page 14 includes a hang-up button 207 and real-time call duration 208. The user may perform a VoIP voice call with the caller through the answering page 14. It may be understood that, if the caller makes a video call, the user may perform a VoIP video call with the caller through the answering page.

In this embodiment of this application, based on the cross-process loading capability of the answering loading module of the VoIP lightweight process, when the user answers the VoIP call, the answering page of the VoIP lightweight process may be rendered to the answering landing page of the VoIP call management service for displaying. In the view of the user, it still seems that the answering page is displayed in the first VoIP application. In this way, user experience is consistent with that of "starting the main application process to answer the call", but the main application process is not started.

For example, as shown in FIG. 6, after the notification management service displays the call notification of the VoIP call message 1, the called user (that is, the user of the terminal device 100) may decline the VoIP call. The VoIP call method further includes a called user declining procedure, where the procedure includes but is not limited to a part or all of step S131 to step S140.

S131: The VoIP lightweight process 1 of the first VOIP application registers a declining callback interface with the VoIP call management service.

In some embodiments, in the foregoing step S111, after reporting the incoming call information 1 of the VoIP call message 1 to the VoIP call management service in the VoIP lightweight process 1, the first VoIP application further registers the declining callback interface with the VoIP call management service in the VoIP lightweight process 1, that is, creates a declining callback interface of a declining callback function in the VoIP call management service. In some embodiments, after starting the VoIP lightweight process 1, the first VoIP application registers the declining callback function interface with the VoIP call management service.

S132: After detecting a declining operation of the user or a deletion operation used to delete the call notification, the notification management service invokes a declining service of the VoIP call management service.

In some embodiments, when displaying the call notification of the VoIP call message 1, the notification management service detects the declining operation or the deletion operation of the user; and in response to the declining operation or the deletion operation, the notification management service starts the declining service of the VoIP call management service. The call notification includes a declining button. The declining operation may be a touch operation of tapping the declining button, or may be another operation, for example, a declining operation implemented through a voice, a gesture, or a connected Bluetooth headset. This is not specifically limited herein. The deletion operation may be an upward, leftward, or rightward sliding operation performed on the call notification, or may be another operation. This is not specifically limited herein.

S133: The declining service of the VoIP call management service indicates the notification management service to delete the call notification.

After the notification management service deletes the call notification, the terminal device 100 stops displaying the call notification.

S134: The declining service of the VoIP call management service invokes the declining callback interface of the VoIP lightweight process 1, to perform declining callback.

In embodiments of this application, a sequence of performing step S133 and step S134 is not specifically limited.

S135: The VoIP lightweight process 1 of the first VoIP application performs declining processing in the declining callback.

S136: The VoIP lightweight process 1 of the first VoIP application sends a declining state to the application server 200, to indicate that the user declines the VoIP call corresponding to the VoIP call message 1.

In embodiments of this application, a sequence of performing step S135 and step S136 is not specifically limited. In an implementation, the first VoIP application may perform declining processing in the declining callback, and communicate with the application server 200 to notify the application server 200 of the declining state of the VoIP call message 1. In an implementation, in step S136, with the declining state, the VoIP lightweight process 1 further sends the message ID of the VoIP call message 1 to the application server 200, to indicate that the declining state is specific for the VoIP call message 1.

S137: The VoIP call management service reports the declining state to the lightweight process management service.

S138: The lightweight process management service indicates to destroy the VoIP lightweight process 1 of the first VoIP application.

S139: Perform pre-destruction processing on the VoIP lightweight process 1 of the first VoIP application.

S140: The lightweight process management service destroys the VoIP lightweight process 1.

For specific implementations of step S138 to step S140, refer to related descriptions of the foregoing step S117 to step S119. Details are not described herein again.

In this embodiment of this application, after the user declines the call, the VoIP lightweight process may be destroyed in time, so that device power consumption and memory waste caused by continued running of the VoIP lightweight process after the call is declined are reduced.

For example, as shown in FIG. 7, when the notification management service displays the call notification of the VoIP call message 1, the caller may actively cancel the VoIP call, and the called user may also not answer the VoIP call for a long time. The VoIP call method further includes a no-answer procedure, where the procedure includes but is not limited to a part or all of step S141 to step S146.

S141: When detecting that the caller cancels the VoIP call or the called user does not answer the call for a long time, the VoIP lightweight process 1 of the first VoIP application reports an unanswered state to the VoIP call management service.

In some embodiments, when the caller cancels the VoIP call, the terminal device 400 of the caller sends a second message to the application server 200 to indicate that the caller cancels the VoIP call; the application server 200 sends cancellation information to the VoIP lightweight process 1 of the first VoIP application; and the VoIP lightweight process 1 of the first VoIP application reports, based on the second message, the unanswered state to the VoIP call management service.

In some embodiments, within first duration after the incoming call information 1 is reported in step S111, if the VoIP lightweight process 1 does not load the answering page and perform declining processing, it is determined to report the unanswered state to the VoIP call management service.

S142: The VoIP call management service indicates, based on the unanswered state, the notification management service to delete the deletion call notification.

In some embodiments, the VoIP call management service further generates, based on the unanswered state, a missed call notification for the VoIP call message 1, and indicates the notification management service to display the missed call notification.

S143: The VoIP call management service reports the unanswered state to the lightweight process management service based on the unanswered state.

S144: The lightweight process management service indicates, based on the unanswered state, to destroy the VoIP lightweight process 1 of the first VoIP application.

S145: Perform pre-destruction processing on the VoIP lightweight process 1 of the first VoIP application.

S146: The lightweight process management service destroys the VoIP lightweight process 1.

For specific implementations of step S144 to step S146, refer to related descriptions of the foregoing step S117 to step S119. Details are not described herein again.

In this embodiment of this application, when the terminal device 100 displays the VoIP call notification, and the caller cancels the VoIP call or the called user does not answer the VoIP call for a long time, the VoIP lightweight process of the first VoIP application may be destroyed in time, so that a life cycle of the VOIP lightweight process in a case in which the VoIP call is not connected is controlled, and a waste of device power consumption and memory caused by continuous running of the VoIP lightweight process when the call is not answered for a long time is avoided.

For example, as shown in FIG. 8, after the called user answers the VoIP call, the called user or the caller may hang up the VoIP call in a VoIP call process. The VoIP call method further includes a call hang-up procedure, where the procedure includes but is not limited to a part or all of step S151 to step S157.

S151: After a hang-up operation of the called user is detected or it is detected that the caller hangs up the VoIP call, the first VoIP application destroys the answering page of the VoIP lightweight process 1.

It may be understood that, after the hang-up operation of the called user is detected or the caller hangs up the VoIP call, the VoIP lightweight process 1 stops loading the answering page.

S152: The VoIP lightweight process 1 of the first VoIP application reports a hang-up state to the VoIP call management service.

In some embodiments, if the caller hangs up the VoIP call in the VoIP call process, the terminal device 400 of the caller sends a first message to the application server 200, to indicate that the caller hangs up the VoIP call. The application server 200 sends the first message to the VoIP lightweight process 1 of the first VoIP application. Based on the first message, the VoIP lightweight process 1 of the first VoIP application destroys the answering page, and reports the hang-up state to the VoIP call management service.

In some embodiments, the VoIP lightweight process 1 detects the hang-up operation of the user when loading the answering page; and in response to the hang-up operation, the VoIP lightweight process 1 destroys the answering page, and reports the hang-up state to the VoIP call management service. Refer to the answering page 14 shown in FIG. 5D. The hang-up operation may be an operation of tapping the hang-up button 207 on the answering page 14, or may be another operation. This is not specifically limited herein.

S153: The answering loading module of the VoIP lightweight process of the VoIP call management service destroys the answering landing page based on the hang-up state.

It may be understood that, after the answering landing page is destroyed, the terminal device 100 stops displaying the answering page. In this case, the VoIP call is hung up from a visual perspective of the user.

S154: The VoIP call management service reports, based on the hang-up state, the hang-up state to the lightweight process management service.

S155: The lightweight process management service indicates to destroy the VoIP lightweight process 1 based on the hang-up state.

S156: Perform pre-destruction processing on the VoIP lightweight process 1 of the first VoIP application.

S157: The lightweight process management service destroys the VoIP lightweight process 1.

For specific implementations of step S155 to step S157, refer to related descriptions of the foregoing step S117 to step S119. Details are not described herein again.

In this embodiment of this application, when the user performs the VoIP call after answering the VoIP call, if the called user or the caller may hang up the VoIP call, the VoIP lightweight process of the first VoIP application may be destroyed in time, so that a life cycle of the VoIP lightweight process in a case in which the VoIP call is hung up is controlled, and a waste of device power consumption and memory caused by the VoIP lightweight process after the VoIP call is hung up is avoided.

As shown in FIG. 9, with reference to the foregoing embodiments, this application provides a VoIP call method. The method is applied to an electronic device. The method may include step S201 to step S204. For specific implementation of the method, refer to related descriptions of the foregoing embodiments. The electronic device may be the foregoing terminal device 100.

S201: Receive a VoIP call message sent by an application server of a first VoIP application through a push server, where the VoIP call message is used to request to perform a VoIP call.

S202: Start a first VoIP lightweight process of the first VoIP application, and provide the VoIP call message to the first VoIP lightweight process.

The VoIP call message may be the foregoing VoIP call message 1, and the first VoIP lightweight process may be the foregoing VoIP lightweight process 1.

S203: Display a call notification based on the VoIP call message obtained by the first VoIP lightweight process.

For example, refer to related descriptions in FIG. 4A-1 to FIG. 4A-3 to FIG. 4C. When the VoIP call message is used to request the voice call, the electronic device may display the call notification of the VoIP call message on the current lock screen interface or the non-lock screen interface.

S204: The first VoIP lightweight process establishes a persistent connection to the application server.

The persistent connection may be a call connection used to implement a VoIP call service.

In an implementation, after displaying the call notification based on the VoIP call message obtained by the first VoIP lightweight process, the method further includes: receiving a first operation, where the first operation is used to answer the VoIP call; the first VoIP lightweight process loads, in response to the first operation, an answering page of the VoIP call; displaying the answering page; and the first VoIP lightweight process executes, based on the persistent connection, a call operation with the application server. The first operation may be the foregoing answering operation. For example, refer to related descriptions in FIG. 5A-1 and FIG. 5A-2. After the called user answers the VoIP call, a called user answering procedure may be implemented based on the first VoIP lightweight process. Refer to related descriptions in FIG. 5C and FIG. 5D. The call notification includes an answering button, the first operation may be an operation of tapping the answering button 205, and the answering page may be the answering page 14. The call operation is used to implement the VoIP call with the caller of the VoIP call message.

In an implementation, after the first VoIP lightweight process executes the call operation with the application server, the method further includes: receiving a second operation, where the second operation is used to hang up the VoIP call; and in response to the second operation, destroying the first VoIP lightweight process and stopping displaying the answering page. The second operation may be the foregoing hang-up operation. For example, refer to the related descriptions in FIG. 8. After the called user hangs up the VoIP call, the first VoIP lightweight process is destroyed in time. Refer to the related descriptions in FIG. 5D. The answering page includes the hang-up button 207, and the second operation may be an operation of tapping the hang-up button 207.

In an implementation, after the first VoIP lightweight process executes the call operation with the application server for the VoIP call message, the method further includes: receiving a first message sent by the application server, where the first message indicates that the caller hangs up the VoIP call; and based on the first message, destroying the first VoIP lightweight process and stopping displaying the answering page. For example, refer to the related descriptions in FIG. 8. After the caller hangs up the VoIP call, the first VoIP lightweight process is destroyed in time.

In an implementation, after displaying the call notification based on the VoIP call message obtained by the first VoIP lightweight process, the method further includes: receiving a third operation, where the third operation is used to decline the VoIP call corresponding to the VoIP call message or delete the call notification; and destroying the first VoIP lightweight process in response to the third operation. The third operation may be the foregoing declining operation. For example, refer to the related descriptions in FIG. 6. After the called user declines the VoIP call, the first VoIP lightweight process is destroyed in time. Refer to the related descriptions in FIG. 4A-1 to FIG. 4A-3 to FIG. 4C. The call notification includes a declining button 204, and the third operation may be an operation of tapping the declining button 204.

In an implementation, after displaying the call notification based on the VoIP call message obtained by the first VoIP lightweight process, the method further includes: destroying the first VoIP lightweight process when it is detected that a user does not answer the VoIP call within first duration. For example, refer to the related descriptions in FIG. 7. When the called user does not answer the VoIP call for a long time, the first VoIP lightweight process is destroyed in time.

In an implementation, after the first VoIP lightweight process executes the call operation with the application server for the VoIP call message, the method further includes: receiving a second message sent by the application server, where the second message indicates that the caller cancels calling the VoIP call; and destroying the first VoIP lightweight process based on the second message. For example, refer to the related descriptions in FIG. 7. After the caller cancels the VoIP call, the first VoIP lightweight process is destroyed in time.

In an implementation, the first VoIP lightweight process is independent of a main application process of the first VoIP application.

In an implementation, the electronic device includes an API blocklist, and the first VoIP lightweight process is prohibited from invoking an API in the API blocklist. In an implementation, the electronic device may also include an API trustlist, and an API that can be invoked by the first VoIP lightweight process is controlled based on the API trustlist. For details, refer to the related descriptions in step S107.

In an implementation, before destroying the first VoIP lightweight process, the method further includes: performing pre-destruction processing on the first VoIP lightweight process. For details, refer to the related descriptions in the foregoing step S118.

In an implementation, the electronic device further includes a push service, a lightweight process management service, a VoIP call management service, and a notification management service, and receiving the VoIP call message sent by the application server of the first VoIP application through the push server includes: The push service receives the VoIP call message sent by the application server through the push server; and the push service sends the VoIP call message to the lightweight process management service. Starting the first VoIP lightweight process of the first VoIP application, and providing the VoIP call message to the first VoIP lightweight process includes: The lightweight process management service starts the first VoIP lightweight process of the first VoIP application, and sends the VoIP call message to the first VoIP lightweight process. Displaying the call notification based on the VoIP call message obtained by the first VoIP lightweight process includes: The first VoIP lightweight process sends incoming call information of the VoIP call message to the VoIP call management service; and the VoIP call management service indicates the notification management service to display the call notification of the VoIP call message based on the incoming call information.

For example, refer to the related descriptions in FIG. 4A-1 to FIG. 4A-3. After the push server 300 sends the VoIP call message to the push service of the electronic device, the VoIP lightweight process of the first VoIP application may be started based on the lightweight process management service, and the call notification is displayed based on the VoIP call management service and the notification management service. User experience may be consistent with that of "starting the main application process for answering", but the main application process is not started, and device power consumption and required memory are reduced.

In an implementation, after the push service sends the VoIP call message to the lightweight process management service, the method further includes: The lightweight process management service enables a first timer. After the first VoIP lightweight process sends the incoming call information of the VoIP call message to the VoIP call management service, the method further includes: The VoIP call management service sends a call status to the lightweight process management service, where the call status indicates that the incoming call information is reported; and before the first timer expires, if the lightweight process management service has received the call status, the lightweight process management service disables the first timer; or before the first timer expires, if the lightweight process management service has not received the call status, the lightweight process management service destroys the first VoIP lightweight process when the first timer expires.

The first timer may be the foregoing life cycle timer 1. For example, refer to the related descriptions in FIG. 4A-1 to FIG. 4A-3. The first timer may be used, so that the first VoIP application needs to invoke, within specified time, an interface of the VoIP call management service to report the incoming call information of the VoIP call message. Otherwise, the VoIP lightweight process corresponding to the VoIP call message is destroyed, so that the first VoIP application does not maliciously execute the VoIP lightweight process in the background for a long time based on the VoIP call message.

In an implementation, after the push service sends the VoIP call message to the lightweight process management service, the method further includes: The lightweight process management service sends first indication information of the VoIP call message to the VoIP call management service. After the first VoIP lightweight process sends the incoming call information of the VoIP call message to the VoIP call management service, the method further includes: The VoIP call management service verifies validity of the incoming call information based on the first indication information. That the VoIP call management service indicates the notification management service to display the call notification of the VoIP call message based on the incoming call information includes: When it is verified that the incoming call information is valid, the notification management service displays the call notification of the VoIP call message based on the incoming call information.

For example, refer to the related descriptions in FIG. 4A-1 to FIG. 4A-3. The lightweight process management service notifies the VoIP call message to the VoIP call management service in advance, so that the VoIP call management service performs security check on the incoming call information of the VoIP call message, to prevent the first VoIP application from maliciously requesting to display a call notification of an abnormal procedure.

In an implementation, that the first VoIP lightweight process loads, in response to the first operation, the answering page of the VoIP call includes: The notification management service invokes, in response to the first operation, an answering service of the VoIP call management service; the answering service creates a first window, where the first window includes a first page; the answering service invokes an answering loading module on the first page; and the answering loading module invokes, according to a cross-process loading mechanism, the first VoIP lightweight process to load the answering page of the VoIP call, and renders the answering page on the first page. Displaying the answering page includes: displaying the first window.

The first window may be the foregoing full-screen window, and the first page may be the foregoing answering landing page. For example, refer to the related descriptions in FIG. 5A-1 and FIG. 5A-2. After the called user answers the VoIP call, a called user answering procedure may be implemented based on the VoIP call management service and the first VoIP lightweight process according to the cross-process loading mechanism. User experience is consistent with that of "starting the main application process to answer the call", but the main application process is not started.

In an implementation, in response to the second operation, destroying the first VoIP lightweight process and stopping displaying the answering page, or based on the first message, destroying the first VoIP lightweight process and stopping displaying the answering page includes: The first VoIP lightweight process destroys the answering page in response to the second operation or based on the second message; the first VoIP lightweight process sends a hang-up state to the VoIP call management service; the VoIP call management service destroys the first page based on the hang-up state, and sends the hang-up state to the lightweight process management service; and the lightweight process management service destroys the first VoIP lightweight process based on the hang-up state.

For example, refer to the related descriptions in FIG. 8. After the called user or the caller hangs up the VoIP call, a call hang-up procedure is implemented based on the first VoIP lightweight process, the VoIP call management service, and the lightweight process management service, and the first VoIP lightweight process is destroyed in time, to avoid impact of the VoIP lightweight process on device power consumption and memory after the call is hung up.

In an implementation, destroying the first VoIP lightweight process in response to the third operation includes: The notification management service invokes, in response to the third operation, a declining service of the VoIP call management service; the declining service indicates the notification management service to delete the call notification; the declining service indicates the first VoIP lightweight process to perform declining processing on the VoIP call message; the first VoIP lightweight process sends a declining state to the lightweight process management service, where the declining state indicates that the VoIP call is declined; and the lightweight process management service destroys the first VoIP lightweight process based on the declining state.

For example, refer to the related descriptions in FIG. 6. After the called user declines the VoIP call or deletes the call notification, a called user declining procedure is implemented based on the first VoIP lightweight process, the VoIP call management service, and the lightweight process management service, and the first VoIP lightweight process is destroyed in time, to avoid impact of the VoIP lightweight process on device power consumption and memory after the call is declined.

In an implementation, destroying the first VoIP lightweight process when it is detected that the user does not answer the VoIP call within the first duration or destroying the first VoIP lightweight process based on the second message includes: The first VoIP lightweight process sends an unanswered state to the VoIP call management service based on the second message or when it is detected that the user does not answer the VoIP call within the first duration; the VoIP call management service indicates, based on the unanswered state, the notification management service to delete the call notification, and sends the unanswered state to the lightweight process management service; and the lightweight process management service destroys the first VoIP lightweight process based on the unanswered state.

For example, refer to the related descriptions in FIG. 7. After the called user does not answer the VoIP call for a long time or the caller may actively cancel the call, a called user declining procedure is implemented based on the first VoIP lightweight process, the VoIP call management service, and the lightweight process management service, and the first VoIP lightweight process is destroyed in time, to avoid impact of the VoIP lightweight process on device power consumption and memory after the call is not answered.

In an implementation, the method further includes: When starting the first VoIP lightweight process of the first VoIP application, the lightweight process management service loads an API that can be invoked other than the API in the API blocklist to process space of the first VoIP lightweight process. For details, refer to the related descriptions in step S107.

The following describes a structure of the terminal device 100 according to an embodiment of this application.

FIG. 10 is a diagram of a structure of a terminal device 100. The terminal device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure illustrated in this embodiment of this application does not constitute a specific limitation on the terminal device 100. In some other embodiments of this application, the terminal device 100 may include more or fewer components than those shown in the figure, or some components may be combined, or some components may be split, or there may be a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the terminal device 100. The processor 110 communicates with the display 194 through the DSI, to implement a display function of the terminal device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the terminal device 100, or may be used to transmit data between the terminal device 100 and a peripheral device, or may be configured to connect to a headset for playing audio through the headset. The interface may be further configured to connect to another electronic device such as an AR device.

It may be understood that an interface connection relationship between the modules illustrated in embodiments of this application is merely an example for description, and does not constitute a limitation on the structure of the terminal device 100. In some other embodiments of this application, the terminal device 100 may alternatively use an interface connection manner different from that in the foregoing embodiment, or may use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the terminal device 100. The charging management module 140 supplies power to the electronic device through the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 100 may be configured to cover one or more communication frequency bands. Different antennas may also be reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution that is applied to the terminal device 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

In some embodiments, the antenna 1 and the mobile communication module 150 in the terminal device 100 are coupled, and the antenna 2 and the wireless communication module 160 in the terminal device 100 are coupled, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal device 100 implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a camera photosensitive element through a lens, an optical signal is converted into an electrical signal, and the camera photosensitive element transmits the electrical signal to an ISP for processing, to convert the electrical signal into an image visible to naked eyes. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency bin, the digital signal processor is configured to perform Fourier transform on frequency bin energy.

The video codec is configured to compress or decompress a digital video. The terminal device 100 may support one or more video codecs. In this way, the terminal device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the terminal device 100 may be implemented through the NPU, for example, image recognition, facial recognition, speech recognition, and text understanding.

The internal memory 121 may be one or more random access memories (random access memory, RAM), and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, such as a 5th generation DDR SDRAM, generally referred to as DDR5 SDRAM), or the like. The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia Card, eMMC), and the like according to storage specifications.

The random access memory may be directly read and written by the processor 110, may be configured to store executable programs (such as machine instructions) of an operating system or another running program, and may also be configured to store data of users and applications.

The non-volatile memory may also store the executable programs, the data of the users and the applications, and the like, and may be loaded into the random access memory in advance, to be directly read and written by the processor 110.

The interface 120 for external memory may be configured to connect to an external non-volatile memory, to expand a storage capability of the terminal device 100. The external non-volatile memory communicates with the processor 110 through the interface 120 for external memory, to implement a data storage function. For example, files such as music and videos are stored in the external non-volatile memory.

The terminal device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal device 100 may be configured to listen to music or answer a call in a hands-free mode through the speaker 170A.

The receiver 170B, also referred to as an "earpiece", is configured to convert an electrical audio signal into a sound signal. When a call is answered or speech information is received through the terminal device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor.

The gyroscope sensor 180B may be configured to determine a motion posture of the terminal device 100. In some embodiments, angular velocities of the terminal device 100 around three axes (namely, x, y, and z axes) may be determined by using the gyroscope sensor 180B. The gyroscope sensor 180B may be configured to implement image stabilization during photographing.

The barometric pressure sensor 180C is configured to measure barometric pressure. In some embodiments, the terminal device 100 calculates an altitude based on a barometric pressure value measured by the barometric pressure sensor 180C, to assist in positioning and navigation.

The magnetic sensor 180D includes a Hall sensor. The terminal device 100 may detect opening and closing of a flip cover by using the magnetic sensor 180D.

An acceleration sensor 180E may detect accelerations of the terminal device 100 in various directions (usually on three axes).

The distance sensor 180F is configured to measure a distance. The terminal device 100 may measure the distance in an infrared manner or a laser manner.

The optical proximity sensor 180G may include, for example, a light-emitting diode (LED) and an optical detector, for example, a photodiode. The light emitting diode may be an infrared light emitting diode.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the terminal device 100 at a location different from that of the display 194.

The bone conduction sensor 180M may obtain a vibration signal.

The button 190 includes a power button, a volume button, and the like. The button 190 may be a mechanical button, or may be a touch button.

The motor 191 may generate a vibration prompt. The motor 191 may be configured to provide an incoming call vibration prompt and a touch vibration feedback.

The indicator 192 may be an indicator light, and may be configured to indicate a charging status, a power change, a message, a missed call, a notification, and the like.

The SIM card interface 195 is configured to connect to a SIM card.

The following describes a structure of a server according to an embodiment of this application.

FIG. 11 shows an example of a structure of an application server 200 according to an embodiment of this application. For a structure of the push server 300, refer to related descriptions of the application server 200. Details are not described subsequently.

As shown in FIG. 11, the application server 200 may include one or more processors 1001, a memory 1002, a communication interface 1003, a transmitter 1005, a receiver 1006, a coupler 1007, and an antenna 1008. These components may be connected through a bus 1004 or in another manner. In FIG. 11, for example, the components are connected through the bus.

Specifically, the communication interface 1003 may be configured for communication between the application server 200 and another communication device, for example, a terminal device 100. Specifically, the communication interface 1003 may be a 3G communication interface, a 4G communication interface, a 5G communication interface, a future new radio communication interface, or the like. Not limited to a wireless communication interface, the application server 200 may be further provided with a wired communication interface 1003, for example, a local access network (local access network, LAN) interface. The transmitter 1005 may be configured to perform transmission processing on a signal output by the processor 1001. The receiver 1006 may be configured to perform receiving processing on a mobile communication signal received by the antenna 1008.

In some embodiments of this application, the transmitter 1005 and the receiver 1006 may be considered as one wireless modem. In the application server 200, there may be one or more transmitters 1005 and receivers 1006. The antenna 1008 may be configured to convert electromagnetic energy in a transmission line into an electromagnetic wave in free space, or convert an electromagnetic wave in free space into electromagnetic energy in a transmission line. The coupler 1007 is configured to: divide a mobile communication signal received through the antenna 1008 into a plurality of signals, and allocate the plurality of signals to a plurality of receivers 1006.

The memory 1002 is coupled to the processor 1001, and is configured to store various software programs and/or a plurality of groups of instructions. Specifically, the memory 1002 may include a high-speed random access memory, and may further include a non-volatile memory, for example, one or more disk storage devices, a flash memory device, or another non-volatile solid-state storage device. The memory 1002 may store a network communication program, and the network communication program may be configured to communicate with one or more additional devices, one or more terminal devices, and one or more network devices.

In some embodiments of this application, the memory 1002 may be configured to store a program for implementing, on the application server 200 side, the application distribution method provided in one or more embodiments of this application. For implementations of the application distribution method provided in the one or more embodiments of this application, refer to the foregoing embodiments.

The processor 1001 may be configured to read and execute computer-readable instructions. Specifically, the processor 1001 may be configured to: invoke a program stored in the memory 1002, for example, the program for implementing, on the application server 200 side, the application distribution method provided in one or more embodiments of this application, and execute instructions included in the program.

It should be noted that the application server 200 shown in FIG. 11 is merely an implementation of embodiments of this application. In actual application, the application server 200 may further include more or fewer components. This is not limited herein.

For more details about functions and working principles of the application server 200, refer to related content in the foregoing embodiments. Details are not described herein again.

The implementations of this application may be randomly combined to achieve different technical effects.

All or some of the foregoing embodiments may be implemented through software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, such as a ROM, a random access memory RAM, a magnetic disk, or an optical disc.

In summary, the foregoing description is merely embodiments of the technical solutions of this application, but is not intended to limit the protection scope of this application. Any modification, equivalent substitution, and improvement made according to the disclosure of this application shall fall within the protection scope of this application.

## Claims

1. A VoIP call method, applied to an electronic device, wherein the electronic device comprises a first VoIP application, and the method comprises:
receiving a VoIP call message sent by an application server of the first VoIP application through a push server, wherein the VoIP call message is used to request to perform a VoIP call;
starting a first VoIP lightweight process of the first VoIP application, and providing the VoIP call message to the first VoIP lightweight process;
displaying a call notification based on the VoIP call message obtained by the first VoIP lightweight process; and
establishing, by the first VoIP lightweight process, a persistent connection to the application server.

2. The method according to claim 1, after displaying the call notification based on the VoIP call message obtained by the first VoIP lightweight process, further comprising:
receiving a first operation, wherein the first operation is used to answer the VoIP call;
loading, by the first VoIP lightweight process in response to the first operation, an answering page of the VoIP call;
displaying the answering page; and
executing, by the first VoIP lightweight process based on the persistent connection, a call operation with the application server.

3. The method according to claim 2, after executing, by the first VoIP lightweight process, the call operation with the application server, further comprising:
receiving a second operation, wherein the second operation is used to hang up the VoIP call; and
in response to the second operation, destroying the first VoIP lightweight process and stopping displaying the answering page.

4. The method according to claim 2, after executing, by the first VoIP lightweight process, the call operation with the application server for the VoIP call message, further comprising:
receiving a first message sent by the application server, wherein the first message indicates that the caller hangs up the VoIP call; and
based on the first message, destroying the first VoIP lightweight process and stopping displaying the answering page.

5. The method according to claim 1, after displaying the call notification based on the VoIP call message obtained by the first VoIP lightweight process, further comprising:
receiving a third operation, wherein the third operation is used to decline the VoIP call corresponding to the VoIP call message or delete the call notification; and
destroying the first VoIP lightweight process in response to the third operation.

6. The method according to claim 1, after displaying the call notification based on the VoIP call message obtained by the first VoIP lightweight process, further comprising:
destroying the first VoIP lightweight process when it is detected that a user does not answer the VoIP call within first duration.

7. The method according to claim 1, after executing, by the first VoIP lightweight process, the call operation with the application server for the VoIP call message, further comprising:
receiving a second message sent by the application server, wherein the second message indicates that the caller cancels calling the VoIP call; and
destroying the first VoIP lightweight process based on the second message.

8. The method according to any one of claims 1 to 7, wherein the first VoIP lightweight process is independent of a main application process of the first VoIP application.

9. The method according to any one of claims 1 to 7, wherein the electronic device comprises an API blocklist, and the first VoIP lightweight process is prohibited from invoking an API in the API blocklist.

10. The method according to any one of claims 1 to 7, before destroying the first VoIP lightweight process, further comprising:
performing pre-destruction processing on the first VoIP lightweight process.

11. The method according to any one of claims 1 to 10, wherein the electronic device further comprises a push service, a lightweight process management service, a VoIP call management service, and a notification management service, and receiving the VoIP call message sent by the application server of the first VoIP application through the push server comprises:
receiving, by the push service, the VoIP call message sent by the application server through the push server; and
sending, by the push service, the VoIP call message to the lightweight process management service;
starting the first VoIP lightweight process of the first VoIP application, and providing the VoIP call message to the first VoIP lightweight process comprises:
starting, by the lightweight process management service, the first VoIP lightweight process of the first VoIP application, and sending the VoIP call message to the first VoIP lightweight process; and
displaying the call notification based on the VoIP call message obtained by the first VoIP lightweight process comprises:
sending, by the first VoIP lightweight process, incoming call information of the VoIP call message to the VoIP call management service; and
indicating, by the VoIP call management service, the notification management service to display the call notification of the VoIP call message based on the incoming call information.

12. The method according to claim 11, after sending, by the push service, the VoIP call message to the lightweight process management service, further comprising:
enabling a first timer by the lightweight process management service; and
after sending, by the first VoIP lightweight process, the incoming call information of the VoIP call message to the VoIP call management service, further comprising:
sending, by the VoIP call management service, a call status to the lightweight process management service, wherein the call status indicates that the incoming call information is reported; and
before the first timer expires, if the lightweight process management service has received the call status, disabling the first timer by the lightweight process management service; or
before the first timer expires, if the lightweight process management service has not received the call status, destroying, by the lightweight process management service, the first VoIP lightweight process when the first timer expires.

13. The method according to claim 11, after sending, by the push service, the VoIP call message to the lightweight process management service, further comprising:
sending, by the lightweight process management service, first indication information of the VoIP call message to the VoIP call management service;
after sending, by the first VoIP lightweight process, the incoming call information of the VoIP call message to the VoIP call management service, further comprising:
verifying, by the VoIP call management service, validity of the incoming call information based on the first indication information; and
indicating, by the VoIP call management service, the notification management service to display the call notification of the VoIP call message based on the incoming call information comprises:
when it is verified that the incoming call information is valid, displaying, by the notification management service, the call notification of the VoIP call message based on the incoming call information.

14. The method according to claim 11, wherein loading, by the first VoIP lightweight process in response to the first operation, the answering page of the VoIP call comprises:
invoking, by the notification management service in response to the first operation, an answering service of the VoIP call management service;
creating, by the answering service, a first window, wherein the first window comprises a first page;
invoking, by the answering service, an answering loading module on the first page; and
invoking, by the answering loading module according to a cross-process loading mechanism, the first VoIP lightweight process to load the answering page of the VoIP call, and rendering the answering page on the first page; and
displaying the answering page comprises:
displaying the first window.

15. The method according to claim 11, wherein in response to the second operation, destroying the first VoIP lightweight process and stopping displaying the answering page, or based on the first message, destroying the first VoIP lightweight process and stopping displaying the answering page comprises:
destroying the answering page by the first VoIP lightweight process in response to the second operation or based on the second message;
sending, by the first VoIP lightweight process, a hang-up state to the VoIP call management service;
destroying, by the VoIP call management service, the first page based on the hang-up state, and sending the hang-up state to the lightweight process management service; and
destroying, by the lightweight process management service, the first VoIP lightweight process based on the hang-up state.

16. The method according to claim 11, wherein destroying the first VoIP lightweight process in response to the third operation comprises:
invoking, by the notification management service in response to the third operation, a declining service of the VoIP call management service;
indicating, by the declining service, the notification management service to delete the call notification;
indicating, by the declining service, the first VoIP lightweight process to perform declining processing on the VoIP call message;
sending, by the first VoIP lightweight process, a declining state to the lightweight process management service, wherein the declining state indicates that the VoIP call is declined; and
destroying, by the lightweight process management service, the first VoIP lightweight process based on the declining state.

17. The method according to claim 11, wherein destroying the first VoIP lightweight process when it is detected that the user does not answer the VoIP call within the first duration or destroying the first VoIP lightweight process based on the second message comprises:
sending, by the first VoIP lightweight process, an unanswered state to the VoIP call management service based on the second message or when it is detected that the user does not answer the VoIP call within the first duration;
indicating, by the VoIP call management service based on the unanswered state, the notification management service to delete the call notification, and sending the unanswered state to the lightweight process management service; and
destroying, by the lightweight process management service, the first VoIP lightweight process based on the unanswered state.

18. The method according to claim 11, further comprising:
when starting the first VoIP lightweight process of the first VoIP application, loading, by the lightweight process management service, an API that can be invoked other than the API in the API blocklist to process space of the first VoIP lightweight process.

19. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the VoIP call method according to any one of claims 1 to 18.

20. A computer-readable storage medium, comprising computer instructions, wherein when the computer instructions are run on a terminal device, the electronic device is enabled to perform the VoIP call method according to any one of claims 1 to 18.
